# EUROPEAN PATENT SPECIFICATION

(11) **EP 4 564 862 B1**
(45) Date of publication and mention of the grant of the patent: **09.12.2026**
(21) Application number: 23845629.7
(22) Date of filing: 27.07.2023
(51) Int. Cl.: H04W 4/38

(54) **COMMUNICATION SENSING METHOD AND APPARATUS**
KOMMUNIKATIONSERFASSUNGSVERFAHREN UND -VORRICHTUNG
PROCÉDÉ ET APPAREIL DE DÉTECTION DE COMMUNICATION

(30) Priority: 28.07.2022 CN 202210897812
(43) Date of publication of application: 04.06.2025
(73) Proprietor: Huawei Technologies Co., Ltd., Shenzhen, Guangdong 518129 (CN)
(72) Inventor: XU, Shengfeng, Shenzhen, Guangdong 518129 (CN); YING, Jiangwei, Shenzhen, Guangdong 518129 (CN); ZHU, Fangyuan, Shenzhen, Guangdong 518129 (CN)
(74) Representative: Gill Jennings & Every LLP
(86) International application number: PCT/CN2023/109491
(87) International publication number: WO 2024/022422

(56) References cited:
- WO-A1-2021/237486
- WO-A1-2021/251540
- WO-A1-2022/067655
- WO-A1-2022/067655
- WO-A1-2023/116754
- WO-A1-2023/116755
- US-A1- 2020 275 402
- US-A1- 2021 298 073
- CHINA TELECOM: "Motivation on Integrating Sensing with Communication in NR", vol. TSG RAN, no. Budapest, Hungary; 20220606 - 20220609, 30 May 2022 (2022-05-30), XP052154333, Retrieved from the Internet <URL:https://ftp.3gpp.org/tsg_ran/TSG_RAN/TSGR_96/Docs/RP-221291.zip RP-221291 Motivation on Integrating Sensing with Communication in NR v1.pptx> [retrieved on 20220530]

## Description

This application claims priority to Chinese Patent Application No. 202210897812.5, filed with the China National Intellectual Property Administration on July 28, 2022 and entitled "COMMUNICATION SENSING METHOD AND APPARATUS".

### TECHNICAL FIELD

Embodiments of this application relate to the communication field, and more specifically, to a communication sensing method and apparatus.

### BACKGROUND

With the evolution of communication technologies, a sensing capability is derived from a communication frequency band, especially a millimeter-wave frequency band. When a base station or a terminal has a sensing capability, a communication system may perform sensing and identification on a particular area, a particular object, a particular event, or the like. By using the advantages such as wide coverage, long coverage, large bandwidth, high precision, and a low delay of a communication network, an ultra-high sensing capability can be achieved, for example, a sensing capability superior to a sensing capability of an existing radar.

Considering that current sensing and identification are low in accuracy, and causes limited network sensing performance, a solution is urgently needed to resolve sensing requirements in different scenarios, and help improve the network sensing performance.

WO2022/067655 A1 describes methods, systems, and devices for dynamically controlling wireless sensing procedures, such as radar sensing, in user equipment (UE).

US 2020/0275402 A1 describes ethods and systems that integrate a sensing system with a wireless communication system.

CHINE TELECOM: "Motivation on Integrating Sensing with Communication in NR" discusses the integration of sensing with communication (ICAS) in 5G and future 6G systems.

### SUMMARY

This application provides a communication sensing method and apparatus, to improve network sensing performance. The present invention is defined by the features disclosed in the independent claims. Additonal embodiments are defined in the dependent claims.

According to a first aspect, a communication sensing method is provided. The method may be performed by a sensing network element (for example, a sensing function (sensing function, SF) network element), or may be performed by a chip or circuit configured to implement a function of the sensing network element. This is not limited in this application. For ease of description, descriptions are provided below by using an example in which the method is performed by the sensing network element.

The method includes: The sensing network element determines sensing configuration information associated with a first sensing mode, where the first sensing mode is one of a terminal assisted sensing mode, a network assisted sensing mode, a multi-terminal collaborative sensing mode, or a terminal based sensing mode, and the sensing configuration information is used by a first terminal to perform a sensing operation. The sensing network element sends the sensing configuration information to the first terminal.

According to the solution provided in this application, for different sensing modes in which a terminal participates, sensing configuration performed by the sensing network element on the terminal is implemented. This helps improve network sensing performance.

With reference to the first aspect, in some implementations of the first aspect, when the first sensing mode is the terminal based sensing mode, the sensing configuration information includes one or more of the following: the terminal based sensing mode, sensing area information, sensing time information, or a sensing service requirement.

Based on the sensing mode, the first terminal sends a sensing signal and receives a reflected echo signal.

With reference to the first aspect, in some implementations of the first aspect, when the first sensing mode is the network assisted sensing mode, the sensing configuration information includes one or more of the following: the network assisted sensing mode, sensing time information, or sensing resource information.

Based on the sensing mode, an access network device sends a sensing signal, and the first terminal receives a reflected echo signal, so that the terminal assists collaborative sensing in a network. This helps improve a sensing effect.

With reference to the first aspect, in some implementations of the first aspect, the sensing network element sends first sensing control information to an access network device, where the first sensing control information indicates the access network device to perform a sensing operation, and the first sensing control information includes one or more of the following: the network assisted sensing mode, sensing area information, sensing time information, or a sensing service requirement.

Based on this implementation, in the network assisted sensing mode, the sensing network element performs sensing configuration on the access network device, so that the first terminal and the access network device perform collaborative sensing. This helps improve the network sensing performance. In addition, a quantity of first terminals is not specifically limited in this application. For example, a plurality of first terminals simultaneously receive reflected echo signals, so that time-frequency domain resources can be effectively saved, and the sensing effect can be further improved.

With reference to the first aspect, in some implementations of the first aspect, the sensing network element sends first destination address information to the first terminal, where the first destination address information indicates a first destination address for sending sensing data, and the sensing data is obtained based on the sensing operation.

With reference to the first aspect, in some implementations of the first aspect, the sensing network element sends a protocol data unit (protocol data unit, PDU) session parameter to the first terminal; or the sensing network element sends application information to the first terminal, where the application information is used to determine the PDU session parameter, the PDU session parameter is used to establish a PDU session, and the PDU session is used for transmission of sensing data.

The PDU session parameter includes one or more of the following: a data network name (data network name, DNN), single-network slice selection assistance information (single-network slice selection assistance information, S-NSSAI), a PDU session type, or the like.

Based on the foregoing implementation, after obtaining the sensing data, the first terminal may send the sensing data to the first destination address via the PDU session, to subsequently provide a sensing service to a demander.

With reference to the first aspect, in some implementations of the first aspect, when the first sensing mode is the terminal assisted sensing mode, the sensing configuration information includes one or more of the following: the terminal assisted sensing mode, sensing area information, sensing time information, or a sensing service requirement.

Based on the sensing mode, the first terminal sends a sensing signal, and the access network device receives a reflected echo signal, so that the terminal assists collaborative sensing in a network. This helps improve a sensing effect.

With reference to the first aspect, in some implementations of the first aspect, the sensing network element sends second sensing control information to an access network device, where the second sensing control information indicates the access network device to perform a sensing operation, and the second sensing control information includes one or more of the following: the terminal assisted sensing mode, sensing time information, or sensing resource information.

Based on this implementation, in the terminal assisted sensing mode, the sensing network element performs sensing configuration on the access network device, so that the terminal and the access network device perform collaborative sensing. This helps improve the network sensing performance. **In** addition, a quantity of access network devices is not specifically limited in this application. For example, a plurality of access network devices simultaneously receive reflected echo signals, so that time-frequency domain resources can be effectively saved, and the sensing effect can be further improved.

With reference to the first aspect, in some implementations of the first aspect, the sensing network element sends second destination address information to the access network device, where the second destination address information indicates a second destination address for sending sensing data, and the sensing data is obtained based on the sensing operation.

Based on the foregoing implementation, after obtaining the sensing data, the access network device may send the sensing data to the second destination address, to subsequently provide a sensing service to the demander.

With reference to the first aspect, in some implementations of the first aspect, when the first sensing mode is the multi-terminal collaborative sensing mode, the sensing configuration information includes one or more of the following: the multi-terminal collaborative sensing mode, sensing area information, sensing time information, an identifier of a second terminal, sensing role information, or a sensing service requirement, where the second terminal performs collaborative sensing with the first terminal.

Based on the sensing mode, the first terminal sends a sensing signal, and the second terminal receives a reflected echo signal, to implement multi-terminal collaborative sensing. This helps improve the sensing effect.

With reference to the first aspect, in some implementations of the first aspect, the sensing network element sends time provision information to the access network device or a policy control function network element, where the time provision information indicates time provision precision of the first terminal, or the time provision information is used to provide time for the first terminal.

Based on this implementation, when the first terminal has a time provision requirement, the time provision information is provided especially in the network assisted sensing mode and the terminal assisted sensing mode, to meet clock synchronization between the first terminal and the access network device, ensure timely and effective sensing operations performed by the first terminal and the access network device, and help improve the sensing effect.

With reference to the first aspect, in some implementations of the first aspect, before the sensing network element determines the sensing configuration information associated with the first sensing mode, the sensing network element determines the first sensing mode based on one or more of the following: a sensing capability of the access network device in a sensing area, time provision subscription information of a terminal in the sensing area, whether there are a plurality of terminals in the sensing area, a sensing service type, indoor or outdoor sensing, a sensing mode priority, or a recommended sensing mode.

Based on this implementation, the sensing network element provides a plurality of sensing modes, including a sensing mode in which a base station participates and a sensing mode in which the terminal participates. A sensing mode may be adaptively determined based on the foregoing parameters, and is used to control the first terminal and/or the access network device to perform a sensing operation. This helps improve the sensing effect.

With reference to the first aspect, in some implementations of the first aspect, before the sensing network element determines the sensing configuration information associated with the first sensing mode, the sensing network element selects the first terminal based on one or more of the following: sensing area information requested by a first network element, terminal sensing information of the first terminal, time provision subscription information or time provision capability information of the first terminal, or the recommended sensing mode.

Based on this implementation, the sensing network element may adaptively select an appropriate first terminal based on the foregoing parameters, so that the first terminal assists collaborative sensing in a network. This helps improve the sensing effect and network sensing performance.

With reference to the first aspect, in some implementations of the first aspect, the sensing network element receives the terminal sensing information from the first terminal, where the terminal sensing information includes one or more of the following: sensing willingness information of the first terminal, sensing capability information of the first terminal, location information of the first terminal, sensing area information of the first terminal, or sensing subscription information of the first terminal.

Based on this implementation, the sensing network element may further determine selection of the first terminal by using the terminal sensing information. This helps improve a subsequent sensing effect and improve network sensing performance.

With reference to the first aspect, in some implementations of the first aspect, the sensing network element determines a second sensing mode based on a sensing result, where the sensing result is obtained based on the sensing operation, or is determined based on the first sensing mode; and/or the sensing network element determines the second sensing mode based on the sensing mode priority; the sensing network element determines sensing configuration information associated with the second sensing mode, where the sensing configuration information is used by the first terminal to perform a sensing operation; and the sensing network element sends the sensing configuration information associated with the second sensing mode to the first terminal, where the second sensing mode includes one of the terminal assisted sensing mode, the network assisted sensing mode, the terminal based sensing mode, or the multi-terminal collaborative sensing mode, and the second sensing mode is different from the first sensing mode.

It should be understood that the sensing result is obtained by performing a sensing operation based on the first sensing mode.

Based on this implementation, the sensing network element may switch the sensing mode based on the sensing result and/or the sensing mode priority, that is, provide a good sensing mode as much as possible for performing a sensing operation. This helps improve the sensing effect and the network sensing performance.

With reference to the first aspect, in some implementations of the first aspect, the sensing network element determines the second terminal based on a sensing result, where the sensing result is obtained based on the sensing operation, or is determined based on the first sensing mode; and/or the sensing network element determines the second terminal based on sensing location information of the first terminal; and the sensing network element sends the sensing configuration information to the second terminal, where the second terminal is different from the first terminal.

For example, the sensing network element may send the sensing configuration information associated with the first sensing mode to the second terminal; or the sensing network element may send the sensing configuration information associated with the second sensing mode to the second terminal.

Based on this implementation, the sensing network element may switch the first terminal based on the sensing result and/or the sensing location information of the first terminal, that is, provide a good assistant terminal as much as possible for performing a sensing operation. This helps improve the sensing effect and the network sensing performance.

With reference to the first aspect, in some implementations of the first aspect, the sensing network element receives a sensing request from the first network element, where the sensing request includes one or more of the following: the sensing service type, the sensing service requirement, indoor or outdoor sensing, an identifier of the first terminal, the recommended sensing mode, the sensing mode priority, an identifier of the first network element, or a sensing application identifier.

Based on this implementation, the sensing network element may control, in a targeted manner, the first terminal and/or the access network device to perform a sensing operation, to improve the network sensing performance.

According to a second aspect, a communication sensing method is provided. The method may be performed by a first terminal (for example, a user equipment (user equipment, UE)), or may be performed by a chip or circuit used in the first terminal. This is not limited in this application. For ease of description, descriptions are provided below by using an example in which the method is performed by the first terminal.

The method includes: The first terminal obtains sensing configuration information, where the sensing configuration information is associated with a first sensing mode, and the first sensing mode is one of a terminal assisted sensing mode, a network assisted sensing mode, a multi-terminal collaborative sensing mode, or a terminal based sensing mode. The first terminal performs a sensing operation based on the sensing configuration information.

According to the solution provided in this application, the first terminal may perform a sensing operation based on the received sensing configuration information. This implements assisted sensing in a sensing mode in which a terminal participates, and helps improve network sensing performance.

With reference to the second aspect, in some implementations of the second aspect, that the first terminal obtains sensing configuration information includes: The first terminal receives the sensing configuration information from a sensing network element; or the first terminal receives the sensing configuration information from an access network device.

With reference to the second aspect, in some implementations of the second aspect, when the first sensing mode is the terminal based sensing mode, the sensing configuration information includes one or more of the following: the terminal based sensing mode, sensing area information, sensing time information, or a sensing service requirement.

With reference to the second aspect, in some implementations of the second aspect, when the first sensing mode is the network assisted sensing mode, the sensing configuration information includes one or more of the following: the network assisted sensing mode, sensing time information, or sensing resource information.

With reference to the second aspect, in some implementations of the second aspect, when the first sensing mode is the terminal assisted sensing mode, the sensing configuration information includes one or more of the following: the terminal assisted sensing mode, sensing area information, sensing time information, or a sensing service requirement.

With reference to the second aspect, in some implementations of the second aspect, when the first sensing mode is the multi-terminal collaborative sensing mode, the sensing configuration information includes one or more of the following: the multi-terminal collaborative sensing mode, sensing area information, sensing time information, an identifier of a second terminal, sensing role information, or a sensing service requirement, where the second terminal performs collaborative sensing with the first terminal.

With reference to the second aspect, in some implementations of the second aspect, the first terminal receives first destination address information from the sensing network element; and the first terminal sends sensing data to a first destination address indicated by the first destination address information, where the sensing data is obtained based on the sensing operation.

For example, the first destination address may be an address of the sensing network element, or may be an address of another network element or a server that can process the sensing data another network element or a server that can process the sensing data. This is not specifically limited in this application. In other words, the first terminal may send the sensing data to the sensing network element by using the first destination address, or may send, by using the first destination address, the sensing data to the another network element or server that can process the sensing data.

With reference to the second aspect, the first terminal receives a DNN or S-NSSAI from the sensing network element; or the first terminal receives application information from the sensing network element, where the application information is used to determine a DNN or S-NSSAI, the DNN or the S-NSSAI is used to establish a PDU session, and the PDU session is used for transmission of the sensing data.

For example, the first terminal sends the sensing data to the first destination address via the PDU session.

With reference to the second aspect, in some implementations of the second aspect, before the first terminal obtains the sensing configuration information, the first terminal sends terminal sensing information to the sensing network element, where the terminal sensing information includes one or more of the following: sensing willingness information of the first terminal, sensing capability information of the first terminal, location information of the first terminal, sensing area information of the first terminal, or sensing subscription information of the first terminal.

According to a seventh aspect, a communication sensing apparatus is provided, including: a processing unit, configured to determine sensing configuration information associated with a first sensing mode, where the first sensing mode is one of a terminal assisted sensing mode, a network assisted sensing mode, a multi-terminal collaborative sensing mode, or a terminal based sensing mode, and the sensing configuration information is used by a first terminal to perform a sensing operation; and a transceiver unit, configured to send the sensing configuration information to the first terminal.

The transceiver unit may perform receiving and sending in the first aspect, and the processing unit may perform processing other than receiving and sending in the first aspect.

According to a ninth aspect, a communication sensing apparatus is provided, including: a processing unit, configured to obtain sensing configuration information, where the sensing configuration information is associated with a first sensing mode, and the first sensing mode is one of a terminal assisted sensing mode, a network assisted sensing mode, a multi-terminal collaborative sensing mode, or a terminal based sensing mode. The processing unit is further configured to perform a sensing operation based on the sensing configuration information.

The transceiver unit may perform receiving and sending in the second aspect, and the processing unit may perform processing other than receiving and sending in the second aspect.

According to a twelfth aspect, a communication apparatus is provided, including a processor and a communication interface. The communication interface is configured to receive data and/or information, and transmit the received data and/or information to the processor. The processor processes the data and/or information. In addition, the communication interface is further configured to output data and/or information that are/is obtained through processing by the processor, so that the method according to the first aspect or the method according to any possible implementation of the first aspect is performed.

### BRIEF DESCRIPTION OF DRAWINGS

FIG. 1 is a diagram of a network architecture applicable to this application;
FIG. 2 is a diagram of a network architecture for sensing communication applicable to this application;
FIG. 3 is a schematic flowchart of a first communication sensing method according to an embodiment of this application;
FIG. 4 is a schematic flowchart of a second communication sensing method according to an embodiment of this application;
FIG. 5 is a schematic flowchart of a third communication sensing method according to an embodiment of this application;
FIG. 6 is a schematic flowchart of a fourth communication sensing method according to an embodiment of this application;
FIG. 7 is a schematic flowchart of a fifth communication sensing method according to an embodiment of this application;
FIG. 8 is a schematic flowchart of a sixth communication sensing method according to an embodiment of this application;
FIG. 9 is a schematic flowchart of a seventh communication sensing method according to an embodiment of this application;
FIG. 10 is a diagram of a structure of a communication sensing apparatus according to an embodiment of this application; and
FIG. 11 is a diagram of a structure of another communication sensing apparatus according to an embodiment of this application.

### DESCRIPTION OF EMBODIMENTS

The following describes technical solutions of this application with reference to the accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In a communication system, a network operated by an operator may be referred to as a public land mobile network (public land mobile network, PLMN), which may also be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network compliant with a requirement of the 3rd generation partnership project (3rd generation partnership project, 3GPP) standard, which is referred to as a 3GPP network for short. The 3GPP network usually includes but is not limited to a 5th generation (5th generation, 5G) mobile communication network, a 4th generation (4th generation, 4G) mobile communication network, and other future communication systems such as a (6th generation, 6G) network.

With the update of mobile communication technologies, a 5G network is constructed in a flexible and efficient manner. The 5G network may use a communication sensing capability as a new capability. For ease of description, a system architecture of the 5G network is used as an example for description. It may be understood that the communication sensing capability and the technical solutions provided in this application may be further applied to another network system. Details are not described herein.

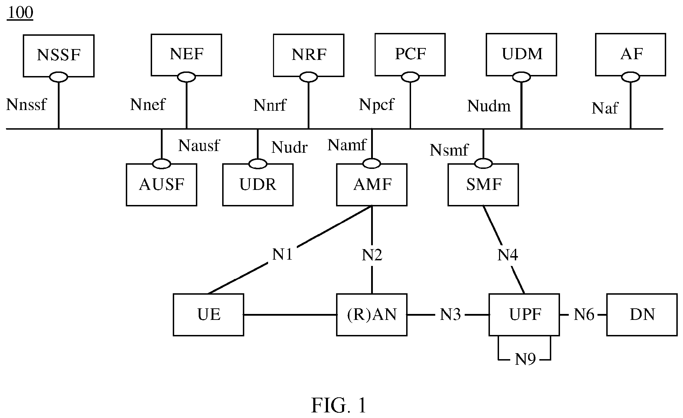

FIG. 1 is a diagram of a network architecture 100 applicable to this application. A 5G network architecture based on a service-based architecture (service-based architecture, SBA) in a non-roaming scenario defined in a 3GPP standardization process is used as an example. As shown in FIG. 1, the network architecture 100 may include three parts: a terminal, a data network (data network, DN), and an operator network PLMN. The following briefly describes a function of a network element of each part.

The terminal may include a terminal device. The terminal device may be referred to as a UE, a handheld terminal, a notebook computer, a cellular phone, a smartphone, a tablet computer, a handheld device, an AR device, a VR device, a machine type communication terminal, or another device that can access a network. The terminal device and an access network device may communicate with each other by using an air interface technology (for example, an NR technology or an LTE technology). Terminal devices may also communicate with each other by using an air interface technology (for example, an NR technology or an LTE technology). In internet of vehicles communication, a communication terminal mounted on a vehicle is a terminal device, and a roadside unit (roadside unit, RSU) may also be used as a terminal device. A communication terminal is mounted on an unmanned aerial vehicle, and may be regarded as a terminal device. In this application, the terminal device may have a sensing capability. For example, a radio frequency module of the terminal device may send a radio frequency signal, and then learn an environment by receiving and processing a reflected signal. Therefore, the terminal device may also detect and/or collect sensing data.

The DN may also be referred to as a packet data network (packet data network, PDN), and is usually a network outside the operator network, for example, a third-party network. In some implementations, the DN may alternatively be deployed by an operator, that is, the DN belongs to a part of the PLMN. The PLMN may access a plurality of DNs, and a plurality of services may be deployed on the DNs, to provide services such as a data service and/or a voice service for the terminal. The terminal may establish a connection to the operator network through an interface (for example, N1) provided by the operator network, and use services such as a data service and/or a voice service provided by the operator network. The terminal may further access the DN through the operator network, and use an operator service deployed on the DN and/or a service provided by a third party.

The PLMN may include a radio access network (radio access network, RAN) and a core network (core network, CN).

The RAN includes the access network device, and is configured to provide a network access function for an authorized terminal in a specific area, and can use transmission tunnels with different quality based on levels of terminals, service requirements, and the like. The RAN network element can manage a radio resource and provide an access service for the terminal, to forward a control signal and terminal data between the terminal and the CN. The RAN may also be understood as a base station in a conventional network. In this application, when the base station performs wireless communication by using a millimeter-wave frequency band, the base station naturally has a sensing capability similar to that of a radar, that is, the base station has both a wireless communication capability and the sensing capability. Therefore, the RAN may detect and/or collect sensing data. The RAN in this application may also be referred to as an integrated communication and radar base station. In this way, communication service coverage for a ground user can be implemented, flight targets such as an unmanned aerial vehicle, a helicopter, and a bird, a ground vehicle flow, a pedestrian, and the like can be detected.

The CN may include but is not limited to: a user plane function (user plane function, UPF), a network exposure function (network exposure function, NEF), a policy control function (policy control function, PCF), a unified data management (unified data management, UDM) function, an AF, a network data analytics function (network data analytics function, NWDAF), a session management function (session management function, SMF), and a mobility management function (access and mobility management function, AMF).

The following further briefly describes the network functions (network functions, NFs) included in the CN.
1. The UPF is a gateway provided by an operator, and is a gateway for communication between an operator network and a DN. The UPF includes user plane functions such as data packet routing and transmission, data packet detection, service usage reporting, quality of service (quality of service, QoS) processing, lawful interception, uplink data packet detection, and downlink data packet storage.
2. The NEF is a control plane function provided by an operator, mainly enables a third party to use a service provided by a network, and supports the network in exposing a capability of the network, event and data analysis, providing security configuration information for a PLMN from an external application, conversion of information exchanged inside and outside the PLMN, and the like.
3. The AMF is a control plane function provided by an operator network, and is responsible for access control and mobility management for accessing the operator network by a terminal, for example, including functions such as mobility status management, allocation of a temporary user identity, and user authentication and authorization.
4. The PCF is a control plane function provided by an operator, and supports a unified policy framework to govern a network behavior and provide subscription information related to a policy rule and policy decision for another control function.
5. The UDM/UDR is a control plane function provided by an operator, and is used to process a terminal identifier, and perform access authentication, registration, mobility management, and the like. A UDM or UDR network element in this embodiment of this application may be a user database, and may exist as a single logical repository for storing user data.
6. The AF is a control plane function provided by an operator, and is used to access a network exposure function network element, interact with a policy framework for policy control, or the like.
7. The NWDAF is a control plane function provided by an operator, and has a main function of collecting data from an NF, an external application function (application function, AF), an operations, administration and maintenance (operations, administration and maintenance, OAM) system, and the like, and provide the NF and the AF with NWDAF service registration, data exposure, data analysis, and the like.
8. The SMF is a control plane network element provided by an operator network, and is responsible for managing a PDU session of a terminal. The PDU session is a channel for transmitting a PDU, and the terminal and a DN needs to transmit the PDU to each other via the PDU session. The SMF is responsible for establishment, maintenance, deletion, and the like of the PDU session. The SMF includes session related functions, such as session management, UPF selection and control, service and session continuity (service and session continuity, SSC) mode selection, and roaming.
9. An NSSF is a control plane function provided by an operator, and mainly includes the following functions: selecting a set of network slice instances for a UE, determining allowed network slice selection assistance information (network slice selection assistance information, NSSAI), determining an AMF set that can serve the UE, and the like.
10. An AUSF is a control plane function provided by an operator, and is used to authenticate a service, generate a key to implement bidirectional authentication for a terminal, and support a unified authentication framework. In addition, the AUSF supports authentication for 3GPP access and non-3GPP access.

It should be understood that the UE, the (R)AN, the UPF, and the DN shown in FIG. 1 are referred to as data plane network functions and entities. Data traffic of the user may be transmitted via a PDU session established between the UE and the DN, and the transmission passes through two network function entities: the (R)AN and the UPF. The remaining parts are referred to as control plane network functions and entities. The control plane network functions and entities are mainly responsible for functions such as authentication and authorization, registration management, session management, mobility management, and policy control, to implement reliable and stable transmission of user-layer traffic. A user plane is used to carry service data, and a control plane is used to carry a signaling message.

It may be understood that the foregoing network elements or functions may be physical entities in a hardware device, software instances running on dedicated hardware, or virtualized functions instantiated on a sharing platform (for example, a cloud platform). In short, an NF may be implemented by hardware or software.

Interfaces between control plane network elements in FIG. 1 are point-to-point interfaces, and Nnssf, Nnef, Nnrf, Npcf, Nudm, Nudr, Naf, Nausf, Namf, Nsmf, N1, N2, N3, N4, N6, and N9 are interface sequence numbers. For example, for meanings of the interface sequence numbers, refer to meanings defined in a 3GPP standard protocol. The meanings of the interface sequence numbers are not limited in this application. It should be noted that interface names between the network functions in FIG. 1 are merely examples. During specific implementation, the interface names of the system architecture may be alternatively other names. This is not limited in this application. In addition, names of messages (or signaling) transmitted between the network elements are merely examples, and do not constitute any limitation on functions of the messages.

It should be understood that the network architecture is merely a network architecture described from a perspective of a service-based architecture, and a network architecture applicable to embodiments of this application is not limited thereto. Any network architecture that can implement functions of the foregoing network elements is applicable to embodiments of this application. A communication sensing method provided in embodiments of this application may further involve a network element that is not shown in FIG. 1. Certainly, the communication sensing method provided in embodiments of this application may alternatively include only some network elements shown in FIG. 1.

It should be further understood that the foregoing names are defined merely for distinguishing between different functions, and should not constitute any limitation on this application. This application does not exclude a possibility that another name is used in the 5G network and another future network. For example, in the 6G network, some or all of the foregoing network elements may still use terms in 5G, or may use other names.

In this application, the network architecture 100 may further include a location management function (location management function, LMF) network element, configured to initiate a positioning procedure of the terminal, and obtain location information of the terminal.

In this application, the network architecture 100 may further include a sensing network element, and the sensing network element is responsible for enabling a sensing service in an end-to-end manner. For example, the sensing network element obtains a sensing requirement based on an internal requirement of a network or a requirement of a demander of the sensing service. After obtaining the sensing requirement, the sensing network element triggers the access network device or the terminal to detect and/or collect sensing data. In this application, the sensing network element may communicate with another network element, for example, a network element like the RAN, the AMF, the SMF, or the LMF.

It should be noted that in the 5G network, the sensing network element may be one of network elements in a 5G core network (5G core, 5GC). Alternatively, the sensing network element may be a non-core network element. Alternatively, the sensing network element may be independently deployed. Alternatively, the sensing network element may be a sub-network element or a module in the network element in the 5GC. For example, the sensing network element may be deployed together with the AMF, the UPF, the SMF, or the LMF. This is not particularly limited in this application.

A sensing capability is derived from the millimeter-wave frequency band. When the base station has the sensing capability brought by the millimeter-wave frequency band, a wireless communication system may perform sensing and identification on a specific area, object, or event, to resolve sensing requirements in many scenarios, for example, a self-driving scenario and a family health monitoring scenario.

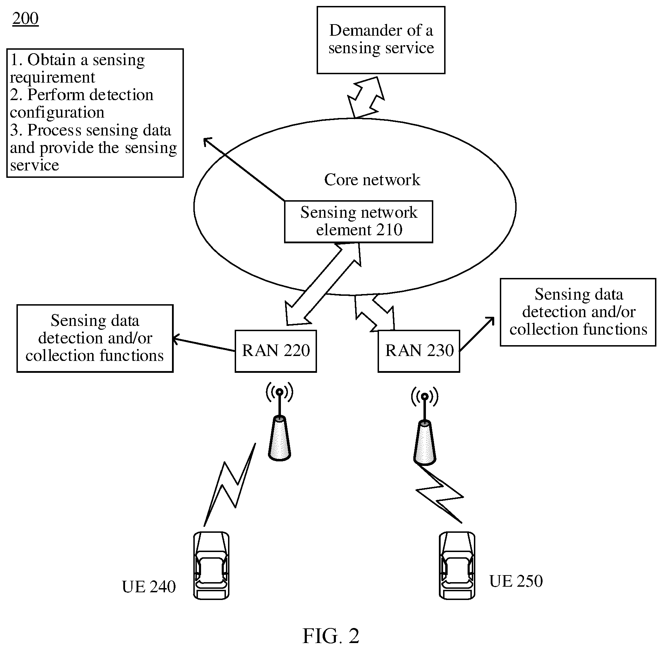

FIG. 2 is a diagram of a network architecture 200 for sensing communication applicable to this application. As shown in FIG. 2, the network architecture 200 includes a sensing network element (for example, an SF), at least one RAN network element having a sensing capability, and at least one UE having a sensing capability. For example, the network architecture 200 includes a sensing network element 210, a RAN 220, a RAN 230, a UE 240, and a UE 250 shown in FIG. 2. The sensing network element 210 is responsible for enabling a sensing service in an end-to-end manner.

For example, the sensing network element 210 may obtain a sensing requirement based on an internal requirement of a network or a requirement of a demander of the sensing service. After obtaining the sensing requirement, the sensing network element 210 triggers the RAN 220 and/or the RAN 230 to detect and/or collect sensing data. For example, the RAN 220 sends a sensing signal to the UE 240 and receives an echo signal from the UE 240, and/or the RAN 230 sends a sensing signal to the UE 250 and receives an echo signal from the UE 250. The RAN 220 and the RAN 230 separately perform specific processing based on the received echo signals to generate sensing data. It should be understood that the echo signal is a reflected signal of the sensing signal that passes an object. Then, the RAN 220 and/or the RAN 230 separately provide/provides the sensing data to the sensing network element 210, and the sensing network element 210 provides a sensing service for the demander based on the sensing data, for example, an AF, an external application server (application server, AS), or a terminal. Alternatively, the sensing network element 210 may perform optimization or the like on an internal network based on the sensing data.

It should be understood that FIG. 1 and FIG. 2 are merely examples of communication network architectures. This is not specifically limited in this application. Any network architecture that can implement functions of the foregoing network elements is applicable to embodiments of this application.

For ease of understanding of embodiments of this application, the following points are described.

First, in this application, unless otherwise stated or there is a logic conflict, terms and/or descriptions between different embodiments are consistent and may be mutually referenced, and technical features in different embodiments may be combined into a new embodiment based on an internal logical relationship thereof.

Second, in this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In the descriptions of this application, the character "/" usually indicates an "or" relationship between the associated objects. "At least one of the following items (pieces)" or a similar expression thereof means any combination of these items, including any combination of singular items (pieces) or plural items (pieces). For example, at least one of a, b, and c may indicate a, b, c, a and b, a and c, b and c, or a, b, and c. Each of a, b, and c may be in a singular form or a plural form.

Third, in this application, "first", "second", and various numbers (for example, #1 and #2) are merely used for distinguishing for ease of description and are not intended to limit the scope of embodiments of this application, for example, distinguishing different messages or the like, rather than describing a particular order or sequence. It should be understood that objects described in such a way are interchangeable in an appropriate circumstance, so that a solution other than embodiments of this application can be described.

Fourth, in this application, descriptions such as "when ... ", "in a case of ...", and "if" all mean that a device performs corresponding processing in a specific objective situation, and are not intended to limit time. The descriptions do not mean that the device is required to have a determining action during implementation, and do not mean any other limitation.

Fifth, the terms "include", "contain" and any other variants thereof in this application are intended to cover non-exclusive inclusion. For example, a process, method, system, product, or device that includes a series of steps or units is not limited to those clearly listed steps or units, but may include other steps or units that are not explicitly listed or are inherent to such a process, method, system, product, or device.

Sixth, in this application, the term "indicate" may include a direct indication and an indirect indication. When a piece of indication information indicates A, the indication information may directly indicate A or indirectly indicate A, but it does not indicate that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. **In** addition, sending periodicities and/or sending occasions of the sub-information may be the same or may be different. A specific sending method is not limited in this application.

The "indication information" in embodiments of this application may be an explicit indication, that is, directly indicated by signaling, or obtained with reference to another rule or another parameter or through derivation based on a parameter indicated by signaling; or may be an implicit indication, that is, obtained according to a rule or a relationship, or based on another parameter, or through derivation. This is not specifically limited in this application.

Seventh, "protocols" in this application may be standard protocols in the communication field, for example, may include a 5G protocol, a new radio (new radio, NR) protocol, and a related protocol applied to a future communication system. This is not limited in this application. "Preconfiguration" may include pre-definition, for example, definition in a protocol. "Pre-definition" may be implemented by pre-storing, in a device, corresponding code or a table, or may be implemented in another manner that may be used for indicating related information. A specific implementation of "pre-definition" is not limited in this application.

Eighth, in this application, "storage" may mean storage in one or more memories. The one or more memories may be separately disposed, or may be integrated into an encoder or a decoder, a processor, or a communication apparatus. Alternatively, some of the one or more memories may be separately disposed, and some of the one or more memories are integrated into the decoder, the processor, or the communication apparatus. A type of the memory may be a storage medium in any form. This is not limited in this application.

Ninth, in this application, "communication" may also be described as "data transmission", "information transmission", "data processing", or the like. "Transmission" includes "sending" and "receiving". This is not limited in this application.

Ninth, in this application, a sensing service type may also be referred to as a sensing service identifier or sensing service indication information; a sensing service requirement is also referred to as a sensing requirement; and sensing data is also referred to as sensing service data, sensing service data, sensing application data, or the like. A message A includes information a, which may alternatively be expressed as that the message A contains the information a, or the message A carries the information a. A network element A determines or selects C based on a message B, which may alternatively be expressed as that the network element A determines or selects C based on the message B. Details are not described again below.

A 5G signal can be used for both wireless communication and wireless sensing, which is referred to as integrated sensing and communication, to alleviate increasing shortage of spectrum resources. For example, using the 5G signal for wireless sensing is universally applicable, where using the 5G signal for passive radar detection has advantages such as low costs and convenience; and 5G has a large bandwidth, and a maximum bandwidth can be up to 100 M, so that wireless detection has a good resolution. Using a daily communication signal for radar detection has good concealment; and a 5G millimeter-wave frequency band is close to a millimeter-wave frequency band of a radar, which provides a convenient condition for integration of 5G and the radar.

The following different sensing modes are described in embodiments of this application.
(1) Network assisted sensing mode (Network assisted sensing mode): A base station RAN sends a sensing signal, and a terminal receives a reflected echo signal.
(2) Terminal assisted sensing mode (UE assisted sensing mode): A terminal sends a sensing signal, and a RAN receives a reflected echo signal.
(3) Terminal based sensing mode (UE based sensing mode): A terminal sends a sensing signal and receives a reflected echo signal.
(4) Multi-terminal collaborative sensing mode: A first terminal sends a sensing signal, and a second terminal receives a reflected echo signal.
(5) Monostatic sensing mode: A RAN sends a sensing signal and receives a reflected echo signal.
(6) Multistatic collaborative sensing mode: A first RAN sends a sensing signal, and a second RAN receives a reflected echo signal.

This application provides a communication sensing method and apparatus, to implement sensing configuration on a terminal and/or a base station in different sensing modes in a network. In addition, a solution for determining a sensing mode in a network and selecting a sensing assistant terminal is provided.

The technical solutions provided in this application are described in detail below with reference to the accompanying drawings.

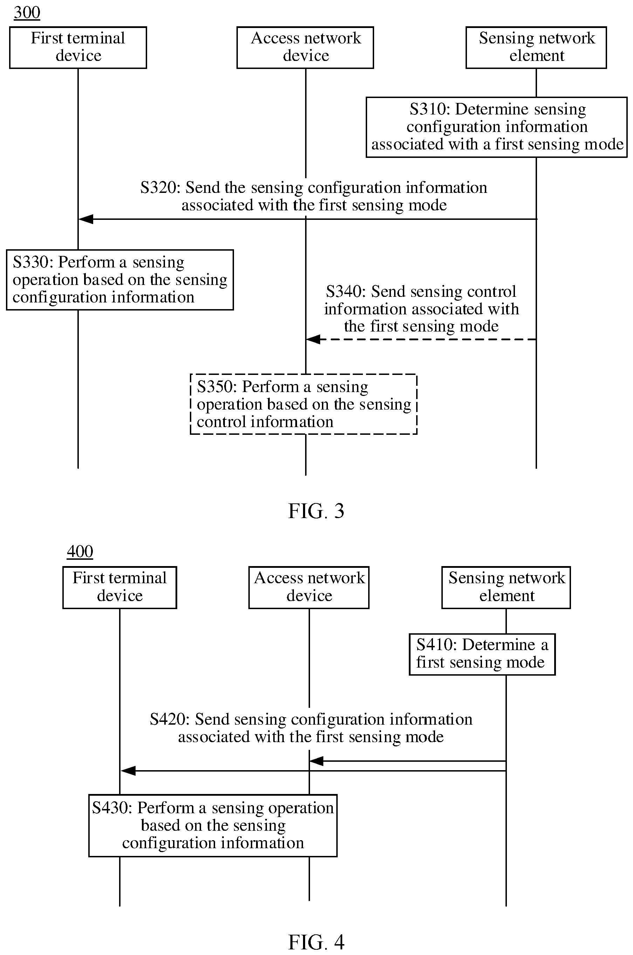

FIG. 3 is a schematic flowchart of a first communication sensing method 300 according to an embodiment of this application. As shown in FIG. 3, the method includes a plurality of steps as follows.

S310: A sensing network element determines sensing configuration information associated with a first sensing mode.

The first sensing mode includes a terminal assisted sensing mode, a network assisted sensing mode, a multi-terminal collaborative sensing mode, or a terminal based sensing mode. It may also be understood as that the first sensing mode is one of the terminal assisted sensing mode, the network assisted sensing mode, the multi-terminal collaborative sensing mode, or the terminal based sensing mode. The sensing configuration information is used by a first terminal to perform a sensing operation.

The sensing operation includes sending a sensing signal and/or receiving a reflected echo signal based on the configuration information. For example, when the sensing mode is the terminal assisted sensing mode, the sensing operation is sending a sensing signal; when the sensing mode is the network assisted sensing mode, the sensing operation is receiving a reflected echo signal; when the sensing mode is the multi-terminal collaborative sensing mode, the sensing operation is sending a sensing signal and/or receiving a reflected echo signal; or when the sensing mode is the terminal based sensing mode, the sensing operation is sending a sensing signal and receiving a reflected echo signal. For details, refer to descriptions of S330.

Being associated with the first sensing mode may be understood as that different sensing modes have corresponding sensing configuration information, and the sensing configuration information indicates parameter information needed by a terminal or a base station in the sensing modes.

**In** a possible implementation, when the first sensing mode is the terminal based sensing mode, the sensing configuration information includes one or more of the following: the terminal based sensing mode, sensing area information, sensing time information, or a sensing service requirement.

It may be understood that the terminal based sensing mode in the sensing configuration information may be understood as information indicating the terminal based sensing mode. For example, when the terminal supports only the sensing mode, or the terminal has preconfigured the sensing mode, the sensing configuration information may not include information indicating the sensing mode. This explanation is also applicable to a case in which the sensing configuration information includes another sensing mode in another implementation, and details are not described again below.

For example, the sensing area information may be a sensing geographical area, and may be understood as that a sensing operation needs to be performed in an area (for example, an area size and/or an area direction) indicated by the sensing area information. The sensing area information may be from a sensing request sent by a first network element to the sensing network element. For details, refer to the following descriptions. The sensing time information may be at least one of the following: sensing duration, a sensing periodicity, or a sensing start moment. The sensing service requirement may be one or more of the following: a sensing distance, a sensing speed range, a sensing distance resolution, sensing angle measurement precision, a sensing speed resolution, a sensing location point, a sensing UE identifier, sensing object identification accuracy, a sensing object identification false alarm rate, sensing data precision, a sensing data update frequency, a sensing dimension indication, or a sensing feedback mode.

The sensing distance resolution is a shortest distance between two targets that are distinguished from each other when the two targets are located at a same azimuth but respectively have different distances from the sensing network element. The sensing angle measurement precision is a capability of the sensing network element to distinguish between adjacent targets in terms of angles. The sensing speed resolution is a capability of the sensing network element to distinguish between targets in terms of radial speeds. The sensing location point may be absolute coordinates or relative coordinates of a geographical location. The sensing UE identifier may be an external identifier of a UE, for example, a generic public subscription identifier (generic public subscription identifier, GPSI). The sensing object recognition accuracy is a probability that a target actually exists and existence of the target is determined. The sensing object recognition false alarm rate may be a probability that a target actually does not exist but existence of the target is determined, or may be a probability that a target actually exists but inexistence of the target is determined. The sensing data precision may be an image resolution. The sensing data update frequency may be an image frame rate. The sensing dimension indication indicates a dimension of sensing data, for example, two-dimensional plane data. The sensing feedback mode may be one or more of the following: single feedback, periodic feedback, and event-triggered feedback.

In another possible implementation, when the first sensing mode is the network assisted sensing mode, the sensing configuration information includes one or more of the following: the network assisted sensing mode, sensing time information, or sensing resource information.

For example, the sensing resource information includes frequency information and/or bandwidth information.

In still another possible implementation, when the first sensing mode is the terminal assisted sensing mode, the sensing configuration information includes one or more of the following: the terminal assisted sensing mode, sensing area information, sensing time information, or a sensing service requirement.

In still another possible implementation, when the first sensing mode is the multi-terminal collaborative sensing mode, the sensing configuration information includes one or more of the following: the multi-terminal collaborative sensing mode, sensing area information, sensing time information, an identifier of a second terminal, sensing role information, or a sensing service requirement, where the second terminal performs collaborative sensing with the first terminal.

For example, the identifier of the second terminal may be an address identifier of the second terminal, a fully qualified domain name (fully qualified domain name, FQDN) of the second terminal, or an application layer identifier of the second terminal. For example, the first terminal includes the identifier of the second terminal in a discovery message, to discover the second terminal, so as to subsequently send a sensing signal to a second terminal. The sensing role information may indicate the first terminal to send a sensing signal, and indicate the second terminal to receive a reflected echo signal. Alternatively, the sensing role information may indicate the second terminal to send a sensing signal, and indicate the first terminal to receive a reflected echo signal. A quantity of first terminals and a quantity of second terminals are not specifically limited in this application.

Optionally, the sensing network element receives the sensing request from the first network element, and determines the sensing configuration information based on the sensing request. The sensing request includes one or more of the following: the sensing service type, the sensing service requirement, indoor or outdoor sensing, an identifier of the first terminal, a recommended sensing mode, a sensing mode priority, an identifier of the first network element, or a sensing application identifier.

For example, the first network element may be a core network element like an AF, a NEF, or an AMF, may be a non-core network element like an external server AS, or may be a terminal like a UE.

For example, the indoor or outdoor sensing may be indoor or outdoor positioning and noise detection, indoor illumination, sensing of an indoor scenario, sensing of an outdoor scenario, or the like. The identifier of the first terminal may be an address identifier of the first terminal, an FQDN of the first terminal, or an application layer identifier of the first terminal. The recommended sensing mode may be one of the terminal assisted sensing mode, the network assisted sensing mode, the multi-terminal collaborative sensing mode, or the terminal based sensing mode. The sensing mode priority includes high, medium, and low priorities, or indicates priorities corresponding to different sensing modes (for example, a priority of the terminal assisted sensing mode is 1, a priority of the network assisted sensing mode is 2, and a priority of the multi-terminal collaborative sensing mode is 3). The identifier of the first network element may be an address identifier of the first network element or an FQDN of the first network element. The sensing application identifier indicates an application (application, APP) requesting a sensing service. The sensing service type may include one or more of the following: object distribution, a map, driving, violation detection, object trajectory tracing, emergency event detection, object positioning, an object contour size, an object speed, weather forecast, a human posture, and human health.

The driving includes one or more of the following: vehicle autonomous driving, vehicle semi-autonomous driving, vehicle remote driving, and vehicle driving assistance; and aircraft autonomous driving, aircraft semi-autonomous driving, aircraft remote driving, and aircraft driving assistance. The violation detection includes one or more of the following: speeding detection, marked lane violation detection, emergency lane occupation detection, unsafe lane change detection, vehicle type and license plate mismatch detection, and abnormal driving route detection. The emergency event detection includes one or more of the following: an object entering a specific area, occurrence of a collision between objects, existence of a risk of a collision between objects, disaster occurrence, and existence of a risk of disaster occurrence. The weather forecast may include one or more of the following: a temperature, an atmospheric pressure, humidity, rainfall, snowfall, a wind speed, a wind direction, a cloud thickness, a concentration of suspended particulate matter, and air quality. The human health may include one or more of the following types: breathing, heartbeat, blood pressure, weight, skin health, sleep quality, and organ abnormality.

In a possible implementation, the AF requests the sensing network element to detect a traveling speed of the UE, where the sensing request carries an identifier of the UE, the sensing feedback mode is periodic feedback, the recommended sensing mode is the network assisted sensing mode or the terminal based sensing mode, and the sensing data precision is required to reach 95%. In this case, sensing configuration information determined by the sensing network element based on a sensing capability of the UE, a sensing mode supported by the UE, and time provision subscription information includes one or more of the following: the terminal based sensing mode, sensing time from 1:00 to 2:00, a sensing feedback periodicity of 10 minutes, the sensing data precision that is required to reach 95%.

Optionally, before the sensing network element determines the sensing configuration information associated with the first sensing mode, the sensing network element may determine the first sensing mode based on one or more of the following: a sensing capability of the access network device in a sensing area, time provision subscription information of a terminal in the sensing area, whether there are a plurality of terminals in the sensing area, a sensing service type, indoor or outdoor sensing, a sensing mode priority, or a recommended sensing mode.

In a possible implementation, if there is one terminal in the sensing area, and the sensing capability of the access network device in the sensing area is weak, the sensing network element may determine that the first sensing mode is the terminal based sensing mode.

In another possible implementation, if the recommended sensing mode is the multi-terminal collaborative sensing mode or the network assisted sensing mode, the network assisted sensing mode has a higher priority, there are a plurality of terminals in the sensing area, and the sensing capability of the access network device in the sensing area is strong, the sensing network element may determine that the first sensing mode is the network assisted sensing mode.

Optionally, the sensing network element may determine a second sensing mode based on a sensing result, where the sensing result is obtained based on the sensing operation, or is determined based on the first sensing mode; and/or the sensing network element determines the second sensing mode based on the sensing mode priority; the sensing network element determines sensing configuration information associated with the second sensing mode, where the sensing configuration information is used by the first terminal to perform a sensing operation; and the sensing network element sends the sensing configuration information associated with the second sensing mode to the first terminal, where the second sensing mode includes one of the terminal assisted sensing mode, the network assisted sensing mode, the terminal based sensing mode, or the multi-terminal collaborative sensing mode, and the second sensing mode is different from the first sensing mode.

It should be understood that the sensing result is obtained by performing a sensing operation based on the first sensing mode.

In a possible implementation, when precision of a currently obtained sensing result does not meet the sensing service requirement, or a priority of a current sensing mode is not the highest, the sensing network element may switch the first sensing mode to the second sensing mode, and re-trigger the first terminal and/or the access network device to perform sensing measurement based on the second sensing mode, to obtain a sensing result with higher precision.

Optionally, before the sensing network element determines the sensing configuration information associated with the first sensing mode, the sensing network element selects the first terminal based on one or more of the following: sensing area information requested by the first network element, terminal sensing information of the first terminal, time provision subscription information or time provision capability information of the first terminal, or the recommended sensing mode.

The terminal sensing information includes one or more of the following: sensing willingness information of the first terminal, sensing capability information of the first terminal, location information of the first terminal, sensing area information of the first terminal, or sensing subscription information of the first terminal.

For example, the sensing willingness information of the first terminal indicates whether the first terminal is willing to perform a sensing operation or participate in a sensing procedure; the sensing capability information of the first terminal may be a sensing signal sending capability, a sensing signal receiving capability, a sensing data computing capability, or the like of the first terminal; the location information of the first terminal indicates a geographical location of the first terminal; the sensing area information of the first terminal indicates an area that the first terminal can sense; and the sensing subscription information of the first terminal may indicate whether the first terminal subscribes to high-precision time provision.

In a possible implementation, if the recommended sensing mode is the terminal assisted sensing mode, the sensing area requested by the first network element includes a UE 1 and a UE 2, both the UE 1 and the UE 2 are willing to participate in the sensing procedure, and only the UE 1 supports performing a sensing collaboration operation with a RAN, the sensing network element may select the UE 1 as an assistant terminal.

It should be noted that, the sensing network element may determine, based on the foregoing parameters, there may be one or more first terminals that may be selected by the sensing network element. When the sensing network element determines that there are a plurality of first terminals that may be selected by the sensing network element, the sensing network element may select one or more first terminals from the plurality of first terminals that meet a condition as an assistant terminal to perform a sensing operation. In other words, a quantity of first terminals is not specifically limited in this application.

Optionally, the sensing network element may determine the second terminal based on a sensing result, where the sensing result is obtained based on the sensing operation, or is determined based on the first sensing mode; and/or the sensing network element determines the second terminal based on sensing location information of the first terminal; and the sensing network element may send the sensing configuration information to the second terminal, where the second terminal is different from the first terminal.

In a possible implementation, when precision of a currently obtained sensing result does not meet the sensing service requirement, the first terminal is currently in a moving state, the first terminal is currently in a non-sensing area, or the first terminal moves out of the sensing area, the sensing network element may re-determine the second terminal, and re-trigger the second terminal and/or the access network device to perform sensing measurement, to obtain a sensing result with higher precision.

S320: The sensing network element sends the sensing configuration information to the first terminal.

Correspondingly, the first terminal receives the sensing configuration information from the sensing network element.

For sensing configuration information corresponding to different sensing modes, refer to the descriptions of step S310. Details are not described herein again.

For example, the sensing network element may first send the sensing configuration information and identification information (for example, a subscription permanent identifier (subscription permanent identifier, SUPI) or a generic public subscription identifier (generic public subscription identifier, GPSI)) of the first terminal to the AMF, and then the AMF sends the sensing configuration information to the first terminal by using a non-access stratum (non-access stratum, NAS) message.

Optionally, the sensing network element may send first destination address information (or first address information for short, which is not described again) to the first terminal based on the terminal based sensing mode, the multi-terminal collaborative sensing mode, and the network assisted sensing mode, where the first destination address information indicates the first terminal to send obtained sensing data to the first destination address. The sensing data is obtained by performing a sensing operation by the first terminal.

For example, the first destination address may be directed to the sensing network element, or may be directed to another network element or a server that can process the sensing data. This is not specifically limited in this application.

Optionally, the sensing network element sends a PDU session parameter to the first terminal; or the sensing network element sends application information to the first terminal, where the application information is used to determine the PDU session parameter, the PDU session parameter is used to establish a PDU session, and the PDU session is used for transmission of sensing data.

Optionally, before the first terminal receives the sensing configuration information from the sensing network element, the first terminal sends the terminal sensing information of the first terminal to the sensing network element. Correspondingly, the sensing network element receives the terminal sensing information from the first terminal.

For specific content and descriptions of the terminal sensing information, refer to step S310. Details are not described herein again.

S330: The first terminal performs a sensing operation based on the sensing configuration information.

In a possible implementation, when the first sensing mode is the terminal based sensing mode, the first terminal may send a sensing signal based on at least one of the sensing area information, the sensing time information, or the sensing service requirement, and receive a reflected echo signal based on the sensing time information and/or the sensing resource information.

For example, the sensing area information indicates an area of 10 meters multiplied by 10 meters in front of the first terminal, sensing time from 1:00 to 2:00, sensing data precision of 99%, and periodic feedback; and the sensing resource information indicates a frequency and bandwidth for sending or receiving a sensing signal. In this case, the first terminal may send, based on the indicated frequency and bandwidth, a sensing signal to the area of 10 meters multiplied by 10 meters in front of the first terminal from 1:00 to 2:00.

Further, the first terminal may receive a reflected echo signal based on the indicated frequency and bandwidth from 1:00 to 2:00, process the received reflected echo signal, generate sensing data or a sensing result whose sensing data precision is 99%, and periodically report the sensing data or the sensing result to the sensing network element.

In another possible implementation, when the first sensing mode is the network assisted sensing mode, the first terminal may receive a reflected echo signal based on the sensing time information and/or the sensing resource information.

For example, the access network device sends a sensing signal, and in this case, the first terminal may receive a reflected echo signal based on the indicated frequency and bandwidth within the sensing time from 1:00 to 2:00, process the received reflected echo signal, generate sensing data or a sensing result, and periodically report the sensing data or the sensing result to the sensing network element.

In still another possible implementation, when the first sensing mode is the terminal assisted sensing mode, the first terminal may send a sensing signal based on at least one of the sensing area information, the sensing time information, or the sensing service requirement.

For example, the sensing area information indicates an area to the left of the first terminal, sensing time is from 1:00 to 2:00, and the sensing resource information indicates a frequency and bandwidth for sending or receiving a sensing signal. In this case, the first terminal may send, based on the indicated frequency and bandwidth, a sensing signal to the area to the left of the first terminal from 1:00 to 2:00.

In still another possible implementation, when the first sensing mode is the multi-terminal collaborative sensing mode, the first terminal may send a sensing signal based on at least one of the sensing area information, the sensing time information, the identifier of the second terminal, the sensing role information, or the sensing service requirement, and the second terminal may receive a reflected echo signal based on the sensing time information, the identifier of the first terminal, the sensing role information, or the sensing resource information.

For example, the sensing role information indicates the first terminal to send a sensing signal, and indicates the second terminal to receive a reflected echo signal, sensing start time is 1:00, the sensing data precision is 90%, and the sensing resource information indicates a frequency and bandwidth for receiving and sending a sensing signal. In this case, the first terminal may start to send a sensing signal to the second terminal from 1:00 based on the indicated frequency and bandwidth.

Further, throughout the day, the second terminal may continuously receive a reflected echo signal based on the indicated frequency and signal bandwidth, process the received reflected echo signal, generate sensing data or a sensing result whose sensing data precision is 90%, and report the sensing data or the sensing result to the sensing network element.

S340: The sensing network element sends sensing control information to the access network device.

Correspondingly, the access network device receives the sensing control information from the sensing network element.

The sensing control information is associated with the first sensing mode, and the first sensing mode includes the network assisted sensing mode or the terminal assisted sensing mode. The sensing control information indicates the access network device to perform a sensing operation.

For example, the sensing network element sends the sensing control information and the identifier of the first terminal to the AMF, and then the AMF sends the sensing control information to the access network device by using an NG application protocol (NG application protocol, NGAP) message. In this case, the access network device may learn, by using the NGAP message, that the sensing control information is associated with the first terminal, and may further send RRC configuration information to the first terminal.

It should be noted that this step is optional. For example, when the first sensing mode is the terminal based sensing mode or the multi-terminal collaborative sensing mode, the access network device does not participate in performing a sensing operation, and the sensing network element does not need to send the sensing control information to the access network device, that is, this step is not performed.

In a possible implementation, when the first sensing mode is the network assisted sensing mode, the sensing control information includes one or more of the following: the network assisted sensing mode, sensing area information, sensing time information, or a sensing service requirement.

In another possible implementation, when the first sensing mode is the terminal assisted sensing mode, the sensing control information includes one or more of the following: the terminal assisted sensing mode, sensing time information, or sensing resource information.

Optionally, the sensing network element may send second destination address information to the access network device based on the terminal assisted sensing mode, where the second destination address information indicates the access network device to send obtained sensing data to a second destination address, where the sensing data is obtained based on the sensing operation performed by the access network device.

For example, the second destination address may be an address of the sensing network element, or may be an address of another network element or a server that can process the sensing data another network element or a server that can process the sensing data. This is not specifically limited in this application.

Optionally, when the first sensing mode is the terminal assisted sensing mode or the network assisted sensing mode, the sensing network element sends time provision information to the access network device or a policy control function network element. Correspondingly, the access network device receives the time provision information from the sensing network element.

In other words, the sensing network element may send the time provision information to the access network device through different network elements.

The time provision information indicates time provision precision of the first terminal, or the time provision information indicates the access network device to provide time for the first terminal.

For example, based on a preconfigured correspondence between sensing precision and time provision precision, if the sensing precision carried in the sensing service requirement is 99%, the sensing network element, the access network device, or the policy control function network element may determine the corresponding time provision precision based on the sensing precision.

It should be noted that, a specific information name, information content, and format that are carried via each network element in a process of sending the time provision information are not specifically limited in this application.

It should be understood that this implementation has a high requirement on clock synchronization between the first terminal and the access network device.

S350: The access network device performs a sensing operation based on the sensing control information.

It should be noted that this step is optional. For example, when the first sensing mode is the terminal based sensing mode or the multi-terminal collaborative sensing mode, the access network device does not participate in performing a sensing operation, that is, this step is not performed.

In a possible implementation, when the first sensing mode is the network assisted sensing mode, the access network device may send a sensing signal based on at least one of the sensing area information, the sensing time information, or the sensing service requirement.

For example, the sensing area information indicates an area to the left of the first terminal, sensing start time is 1:00, and the sensing resource information indicates a frequency and bandwidth for sending or receiving a sensing signal. In this case, the access network device may start to send, based on the indicated frequency and bandwidth, a sensing signal to the area to the left of the first terminal from 1:00.

In another possible implementation, when the first sensing mode is the terminal assisted sensing mode, the access network device may receive a reflected echo signal based on the sensing time information and/or the sensing resource information.

For example, the first terminal sends a sensing signal, and in this case, the access network device may start to receive a reflected echo signal based on the indicated frequency and bandwidth from 1:00, process the received reflected echo signal, generate sensing data or a sensing result whose sensing data precision is 99%, and report the sensing data or the sensing result to the sensing network element.

Optionally, when the first sensing mode is the terminal assisted sensing mode or the network assisted sensing mode, the access network device receives the time provision information from the sensing network element, where the time provision information indicates the time provision precision of the first terminal, and the access network device provides time for the first terminal based on the time provision information, for example, selects an appropriate time provision resource or clock information based on the time provision precision of the first terminal. Alternatively, the access network device receives the time provision precision of the first terminal from the policy control function network element, and provides time for the first terminal.

For example, a time provision procedure may include the following steps: The AMF or the PCF determines, based on terminal time provision information requested from the AF or the sensing network element or terminal time provision subscription information obtained from a UDM, whether the UE has a time provision requirement. When determining that the UE has a time provision requirement, the PCF or the AMF may send indication information to the RAN, for example, a 5G access stratum time distribution indication (5G access stratum time distribution indication), to request the RAN to provide clock information for the UE, where the indication information may include an identifier of the UE and time provision precision of the UE. Correspondingly, after receiving the indication information, the RAN determines, based on the indication information, that the UE has a time provision requirement, and determines clock information that meets the time provision precision of the UE, to send the clock information to the UE. After receiving the clock information, the UE may perform clock synchronization based on the clock information. The PCF may send the indication information in a broadcast mode, or may send the indication information in a unicast mode. This is not limited in this application.

It should be understood that this implementation has a high requirement on clock synchronization between the first terminal and the access network device.

According to the solution provided in this application, for different sensing modes in which a terminal participates, sensing configurations performed by the sensing network element on the first terminal and the access network device can be implemented. This helps improve network sensing performance and improve a sensing effect.

FIG. 4 is a schematic flowchart of a second communication sensing method 400 according to an embodiment of this application. As shown in FIG. 4, the method includes a plurality of steps as follows.

S410: A sensing network element determines a first sensing mode.

The first sensing mode includes a terminal assisted sensing mode, a network assisted sensing mode, a terminal based sensing mode, a monostatic sensing mode, a multistatic collaborative sensing mode, or a multi-terminal collaborative sensing mode. Alternatively, it may be understood as that the first sensing mode is one of a terminal assisted sensing mode, a network assisted sensing mode, a terminal based sensing mode, a monostatic sensing mode, a multistatic collaborative sensing mode, or a multi-terminal collaborative sensing mode.

For example, the sensing network element may determine the first sensing mode based on one or more of the following parameters: a sensing capability of the access network device in a sensing area, time provision subscription information of a terminal in the sensing area, whether there are a plurality of terminals in the sensing area, whether there are a plurality of access network devices in the sensing area, a sensing service type, indoor or outdoor sensing, a sensing mode priority, or a recommended sensing mode.

Specific meanings of the foregoing parameters are similar to those of the parameters in step S310 in the method 300. For brevity, details are not described herein again.

In a possible implementation, if there is one terminal in the sensing area, and the sensing capability of the access network device in the sensing area is weak, the sensing network element may determine that the first sensing mode is the terminal based sensing mode.

In another possible implementation, if there are a plurality of base stations in the sensing area, there is no terminal in the sensing area, the plurality of base stations have strong sensing capabilities for the sensing area, and a sensing collaboration operation between the plurality of base stations is supported, the sensing network element may determine that the first sensing mode is the monostatic sensing mode or the multistatic collaborative sensing mode.

In still another possible implementation, if the recommended sensing mode is the multi-terminal collaborative sensing mode or the network assisted sensing mode, the network assisted sensing mode has a higher priority, there are a plurality of terminals in the sensing area, and the sensing capability of the access network device in the sensing area is strong, the sensing network element may determine that the first sensing mode is the network assisted sensing mode.

In still another possible implementation, if there are a plurality of terminals (for example, a UE 1 and a UE 2) and a plurality of base stations in the sensing area, where UE 1 and the UE 2 each have a sensing capability and are willing to participate in a sensing procedure, the UE 1 has a strong sensing signal sending capability, the UE 2 has a strong sensing signal receiving capability, and the plurality of base stations have weak capabilities for sensing the sensing area, the sensing network element may determine that the first sensing mode is the multi-terminal collaborative sensing mode. Specific sensing roles are that the UE 1 sends a sensing signal, and the UE 2 receives a reflected echo signal.

In still another possible implementation, if there are a plurality of terminals in the sensing area, namely, a UE 1 and a UE 2, the UE 1 supports a sensing collaboration operation and has a high-precision time provision capability, and a base station in the sensing area has a sensing capability and supports a collaborative sensing capability, the sensing network element may determine that the first sensing mode is the terminal assisted sensing mode.

S420: The sensing network element sends sensing configuration information associated with the first sensing mode to the first terminal and/or an access network device, where the sensing configuration information is used to perform a sensing operation.

Correspondingly, the first terminal and/or the access network device receive/receives the sensing configuration information associated with the first sensing mode from the sensing network element.

In a possible implementation, when the first sensing mode is the monostatic sensing mode, the sensing network element sends the sensing configuration information associated with the first sensing mode to the access network device, where the sensing configuration information includes one or more of the following: the monostatic sensing mode, sensing area information, sensing time information, or a sensing service requirement.

In another possible implementation, when the first sensing mode is the multistatic collaborative sensing mode, the sensing network element sends the sensing configuration information associated with the first sensing mode to a first access network device, where the sensing configuration information includes one or more of the following: the multistatic collaborative sensing mode, sensing area information, sensing time information, an identifier of a second access network device, sensing role information, or a sensing service requirement, where the second access network device performs collaborative sensing with the first access network device.

When the first sensing mode is the terminal based sensing mode, the network assisted sensing mode, the terminal based sensing mode, or the multi-terminal collaborative sensing mode, for specific content of the corresponding sensing configuration information, refer to step S310 in the method 300. For brevity, details are not described herein again.

S430: The first terminal and/or the access network device perform/performs a sensing operation based on the sensing configuration information.

**In** a possible implementation, when the first sensing mode is the monostatic sensing mode, the access network device may send a sensing signal based on at least one of the sensing area information, the sensing time information, or the sensing service requirement, and receive a reflected echo signal based on the sensing time information and/or the sensing resource information.

For example, the sensing area information indicates an area of 10 meters multiplied by 10 meters to the right of the access network device and sensing data precision of 90%, and the sensing resource information indicates a frequency and bandwidth for sending or receiving a sensing signal. **In** this case, the access network device may continuously send, based on the indicated frequency and bandwidth, a sensing signal to the area of 10 meters multiplied by 10 meters to the right of the access network device.

Further, the access network device may continuously receive a reflected echo signal based on the indicated frequency and bandwidth, process the received reflected echo signal, generate sensing data or a sensing result whose sensing data precision is 90%, and report the sensing data or the sensing result to the sensing network element.

**In** another possible implementation, when the first sensing mode is the multistatic collaborative sensing mode, the first access network device may send a sensing signal based on at least one of the sensing area information, the sensing time information, the identifier of the second terminal, the sensing role information, or the sensing service requirement, and the second access network device may receive a reflected echo signal based on the sensing time information, the identifier of the first terminal, the sensing role information, or the sensing resource information.

For example, the sensing role information may indicate the second access network device to send a sensing signal, and indicate the first access network device to receive a reflected echo signal, sensing start time is 1:00, the sensing data precision is 90%, and the sensing resource information indicates a frequency and bandwidth for receiving and sending a sensing signal. **In** this case, the second access network device may start to send a sensing signal to the first access network device from 1:00 based on the indicated frequency and bandwidth.

Further, the first access network device may receive a reflected echo signal based on the indicated frequency and signal bandwidth from 1:00, process the received reflected echo signal, generate sensing data or a sensing result whose sensing data precision is 90%, and periodically report the sensing data or the sensing result to the sensing network element.

Optionally, the sensing role information may alternatively indicate the first access network device to send a sensing signal, and indicate the second access network device to receive a reflected echo signal.

When the first sensing mode is the terminal based sensing mode, the network assisted sensing mode, the terminal based sensing mode, or the multi-terminal collaborative sensing mode, for a specific implementation in which the first terminal and the access network device perform sensing operations based on the sensing configuration information, refer to steps S330 and S350 in the method 300. For brevity, details are not described herein again.

It should be noted that other possible implementations of the method 300 are adaptively applicable to the method 400. For example, the first terminal may send the terminal sensing information to the sensing network element; the sensing network element may receive the sensing request from the first network element; or the access network device receives the time provision information from the sensing network element. For brevity, details are not described herein again.

According to the solution provided in this application, the first sensing mode determined by the sensing network element includes a base station-assisted sensing mode and the terminal assisted sensing mode, and the sensing configuration information is determined based on different sensing modes, to further implement sensing configuration for the terminal and/or the access network device. This helps improve network sensing performance and improve the sensing effect.

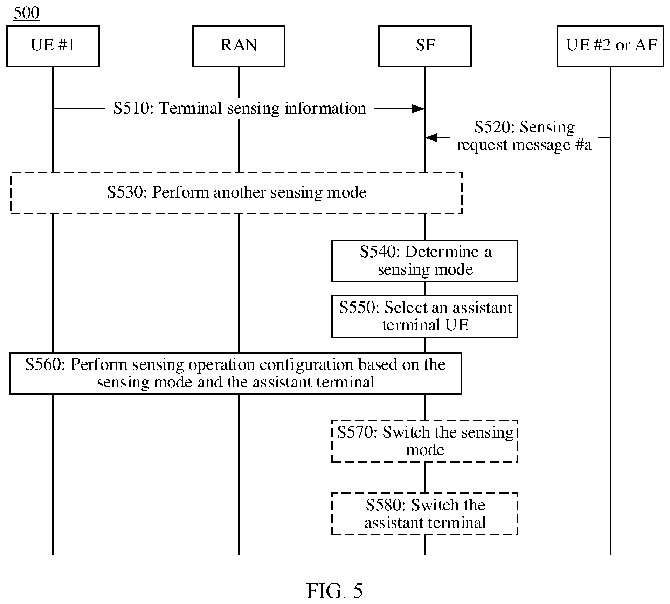

FIG. 5 is a schematic flowchart of a third communication sensing method 500 according to an embodiment of this application. In this implementation, when a terminal participates in sensing, an SF controls, in a unified manner, how to select a sensing mode and select a sensing assistant terminal. As shown in FIG. 5, the method includes a plurality of steps as follows.

S510: A UE #1 sends terminal sensing information to the SF.

Correspondingly, the SF receives the terminal sensing information from the UE #1.

The terminal sensing information includes one or more of the following: sensing willingness information, sensing capability information, sensing location information, or sensing subscription information.

For example, in a registration process, the UE #1 sends the terminal sensing information to the SF through an AMF.

S520: A UE #2 or an AF sends sensing request information #a to the SF.

Correspondingly, the SF receives the sensing request information #a from the UE #2 or the AF.

The sensing request information #a includes sensing service information, for example, a sensing service type, a sensing service requirement, or outdoor/indoor sensing. For specific descriptions of the sensing service type and the sensing service requirement, refer to step S310 in the method 300. For brevity, details are not described herein again.

Optionally, the sensing request information #a further includes one or more of the following: an identifier of the sensing assistant terminal (that is, an identifier of the UE #1, for example, a UE #1 ID), a recommended sensing mode, or a sensing mode priority. The identifier of the sensing assistant terminal may be a GPSI or an application layer identifier.

For example, the UE #2 sends the sensing request information #a to the SF through the AMF; or the AF sends the sensing request information #a to the SF through a NEF.

S530: Optionally, perform another sensing mode.

For example, the another sensing mode may be a monostatic sensing mode or a multistatic collaborative sensing mode. For a specific procedure of monostatic sensing, refer to the method 300. For brevity, details are not described herein again. A sensing result based on the monostatic sensing mode or a sensing result based on a multistatic sensing mode may not meet sensing precision. In this case, the SF may re-determine a sensing mode and/or a sensing assistant terminal. For details, refer to steps S540 and S550 below.

S540: The SF determines a sensing mode.

For example, the SF may obtain sensing capabilities of all base stations in a sensing area in the sensing service requirement received in step S520 in advance (for example, the SF obtains the sensing capabilities of all the base stations in the sensing area from a network management system or locally preconfigures the sensing capabilities of all the base stations in the sensing area). If a base station in the sensing area does not have a corresponding sensing capability, or a terminal in the sensing area does not subscribe to high-precision time provision/does not have a high-precision time provision capability, or in the sensing request information #a in step S520, the sensing assistant terminal corresponding to the identifier of the sensing assistant terminal does not subscribe to high-precision time provision or does not have a high-precision time provision capability, the SF may use a terminal based sensing mode UE based sensing mode.

For example, if there are a plurality of sensing assistant terminals in the sensing area in the sensing service requirement received in step S520, the SF may preferentially use a network assisted sensing mode Network assisted sensing mode.

Optionally, the SF determines a sensing mode based on the sensing service type or indoor/outdoor sensing received in step S520. For example, the SF first obtains a related policy from a PCF, or locally configures sensing modes corresponding to different sensing service types, or a sensing mode corresponding to indoor/outdoor sensing, and then further determines a corresponding sensing mode based on the received sensing service type or indoor/outdoor sensing. Specifically, for indoor sensing, a sensing mode (for example, the network assisted sensing mode) in which a terminal participates, instead of the monostatic sensing mode, tends to be selected. For a sensing service type like a human posture or human health, a sensing mode (for example, the UE based sensing mode) in which a terminal participates, instead of the monostatic sensing mode, tends to be selected.

Optionally, based on the sensing mode priority received in step S520, the SF may first use a high-priority sensing mode, and if a sensing result obtained in the high-priority sensing mode cannot meet the sensing precision, or an appropriate sensing assistant terminal cannot be selected in the high-priority sensing mode, the SF performs sensing detection in a secondary-priority sensing mode.

Optionally, the SF determines a sensing mode based on a sensing mode priority corresponding to the sensing service type received in step S520. For example, the SF first obtains a related policy from the PCF, or locally configures sensing modes with different priorities corresponding to different sensing service types, and then determines a corresponding sensing mode priority based on the received sensing service type, to determine a sensing mode in descending order of priorities.

Optionally, if the sensing request information #a received in step S520 includes the recommended sensing mode, step S540 may not be performed.

It should be noted that, if step S530 is not performed, a sensing mode determined by a sensing network element based on the sensing request information #a in step S520 may be the monostatic sensing mode, or may be the multistatic collaborative sensing mode, and a sensing result obtained by performing a sensing operation based on the monostatic sensing mode or the multistatic collaborative sensing mode is not specifically limited in this application.

S550: The SF selects a sensing assistant terminal.

It should be understood that there may be one or more sensing assistant terminals selected by the SF. This is not specifically limited in this application.

In an example, the SF may select a sensing assistant terminal based on the sensing area and a sensing location point received in step S520 or the sensing location information received in step S410. In this case, the sensing assistant terminal selected by the SF is located within or near the sensing area.

In another example, the SF may select a sensing assistant terminal based on the sensing willingness information, the sensing capability information, and the sensing subscription information received in step S510. In this case, the sensing assistant terminal selected by the SF has a sensing willingness, a sensing capability, and a sensing subscription function.

In still another example, the SF may select a sensing assistant terminal based on the recommended sensing mode received in step S520 or the sensing mode determined in step S540, and terminal time provision subscription information or time provision capability information. The terminal time provision subscription information may be obtained by the SF from a UDM. It should be noted that, when the sensing mode is the network assisted sensing mode or the UE assisted sensing mode, the sensing assistant terminal selected by the SF has a time provision subscription capability or a time provision capability, so that high-precision time provision between the sensing assistant terminal and the base station can be implemented.

It should be understood that the implementations provided above are merely examples for ease of understanding of the solution, and may be implemented separately or in combination. This is not specifically limited in this application. For example, the sensing assistant terminal selected by the SF may meet the following conditions at the same time: being located within or near the sensing area, having a sensing willingness, a sensing capability, and a sensing subscription function, and having a time provision subscription capability or a high-precision time provision capability.

Optionally, the SF may also first trigger positioning of a sensing assistant terminal having a willingness, obtain location information of the terminal that has a willingness, and then select the sensing assistant terminal.

Optionally, if the sensing request information #a in step S520 includes an identifier of the sensing assistant terminal, step S550 may not be performed.

It should be noted that this application has no requirement on an execution sequence of steps S540 and S550.

S560: Perform a sensing operation and sensing configuration based on the selected sensing mode and sensing assistant terminal.

Specific implementations of performing the sensing operation and sensing configuration are separately described in communication sensing methods 600 to 900, and are not described herein.

It should be understood that, based on the implementations, the SF may obtain sensing data or a sensing result.

S570: Optionally, switch the sensing mode.

In an example, the SF may switch the sensing mode based on the sensing result, that is, reselect a sensing mode. For example, when precision of the sensing result obtained by the SF does not meet the sensing service requirement, the SF switches the sensing mode, and triggers, based on a new sensing mode, a RAN and/or a UE to perform sensing detection/collection.

In another example, the SF may switch the sensing mode based on the sensing result and a sensing priority, that is, reselect a sensing mode. For example, when precision of the sensing result obtained by the SF does not meet the sensing service requirement, the SF switches from the high-priority sensing mode to the secondary-priority sensing mode, and controls a RAN and/or a UE to perform sensing detection/collection based on the secondary-priority sensing mode.

S580: Optionally, switch the sensing assistant terminal.

In an example, the SF may switch the sensing assistant terminal based on the sensing result, that is, reselect a sensing assistant terminal. For example, when the precision of the sensing result obtained by the SF does not meet the sensing service requirement, the SF reselects a sensing assistant terminal, and controls the RAN and the reselected sensing assistant terminal to perform sensing detection/collection.

In an example, the SF may switch the sensing assistant terminal based on sensing location information of the sensing assistant terminal, that is, reselect a sensing assistant terminal. For example, when a location of the sensing assistant terminal selected by the SF changes and has been far away from the sensing area, the SF needs to switch the sensing assistant terminal, and controls the RAN and the reselected sensing assistant terminal to perform sensing detection/collection.

According to the solution provided in this application, an implementation in which the sensing network element determines a first sensing mode and selects a first terminal is provided. This helps improve network sensing performance and improve a sensing effect.

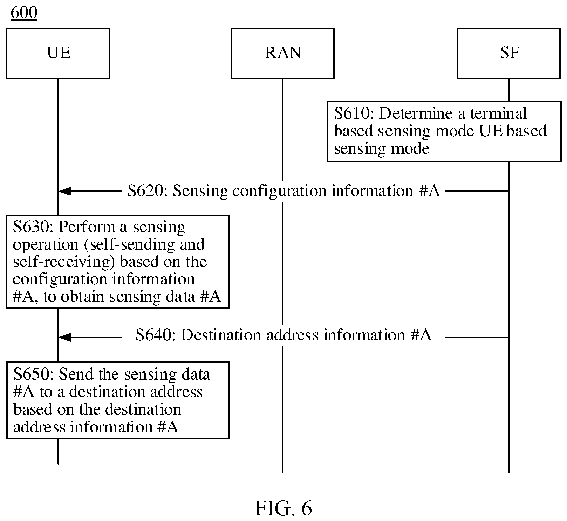

FIG. 6 is a schematic flowchart of a fourth communication sensing method 600 according to an embodiment of this application. In this implementation, an SF controls, in a unified manner, sensing configuration on a terminal and a base station based on a terminal based sensing mode UE based sensing mode. As shown in FIG. 6, the method includes a plurality of steps as follows.

S610: The SF determines that a sensing mode is the terminal based sensing mode UE based sensing mode.

For a scenario in which the terminal based sensing mode UE based sensing mode is determined to be used, refer to step S540 in the method 500. For brevity, details are not described herein again.

S620: The SF sends sensing configuration information #A to a UE.

Correspondingly, the UE receives the sensing configuration information #A from the SF.

The sensing configuration information #A includes at least one of the following: the UE based sensing mode, sensing area information, sensing time information, or a sensing service requirement. For specific descriptions of the sensing area information, the sensing time information, and the sensing service requirement, refer to the sensing configuration information in step S310 in the method 300. For brevity, details are not described herein again.

For example, the sensing configuration information #A carries sensing indication information #A, and the sensing indication information #A indicates the UE to perform a sensing operation.

Optionally, the sensing indication information #A may further indicate that a mode in which the UE performs a sensing operation is the UE based sensing mode.

Optionally, when the sensing configuration information #A does not carry the UE based sensing mode, it may be understood that the UE based sensing mode is preconfigured.

For example, the SF sends the sensing configuration information #A and identification information of a sensing assistant terminal (namely, the UE) to an AMF, and then the AMF sends the sensing configuration information #A to the UE by using a NAS message.

S630: The UE performs a sensing operation based on the sensing configuration information #A, to obtain sensing data #A.

For example, the UE may send a sensing signal to a sensing area indicated by the sensing area information, the UE may send a sensing signal within sensing duration indicated by the sensing time information, the UE may determine information such as a distance resolution, angle measurement precision, and a sensing speed resolution based on the sensing service requirement, or the UE determines information such as a frequency and signal bandwidth based on sensing resource information, and sends a sensing signal on the determined frequency and in the determined signal bandwidth.

Further, the UE may receive a reflected echo signal within sensing time and/or on the frequency indicated by the sensing resource information and in the signal bandwidth indicated by the sensing resource information, and process the received reflected echo signal to generate the sensing data #A. It should be understood that the reflected echo signal is a reflected signal of the sensing signal #A that reaches an object.

S640: The SF sends destination address information #A to the UE.

Correspondingly, the UE receives the destination address information #A from the SF.

The destination address information #A includes at least one of the following: a destination internet protocol (internet protocol, IP) or an FQDN.

Optionally, the SF may further send at least one of the following to the UE: a DNN, S-NSSAI, or application information.

For example, the destination address information #A may be an address that is determined by the SF and that is of a node configured to compute and process the sensing data #A, for example, a server or another network element. Alternatively, the destination address information #A may indicate an address of the SF.

For example, the SF sends the destination address information #A and the identification information of the sensing assistant terminal (namely, the UE) to the AMF, and then the AMF sends the destination address information #A to the UE by using the NAS message.

It should be noted that the sending in step S640 and the sending in step S620 may be performed independently, or may be performed simultaneously. The sensing configuration information #A and the destination address information #A may be sent by using different messages, or may be sent by using a same message. Different information may also be combined. For example, the sensing configuration information #A further includes the destination address information #A, the DNN, the NSSAI, or the application information. This is not specifically limited in this application.

S650: The UE sends the sensing data #A to a destination address based on the destination address information #A.

Optionally, the UE establishes a PDU session based on a received PDU session parameter like the data network name DNN, the single network slice selection assistance information S-NSSAI, or a PDU session type.

Optionally, the UE determines the PDU session parameter based on the application information, to establish the PDU session.

For a process in which the UE establishes the PDU session, refer to a conventional technology. For brevity, details are not described herein again.

For example, the UE sends, by using the established PDU session, the sensing data #A to the destination address indicated by the destination address information #A.

According to the solution provided in this application, for the terminal based sensing mode, sensing configuration performed by the sensing network element on a first terminal is implemented. This helps improve network sensing performance, and improve a sensing effect.

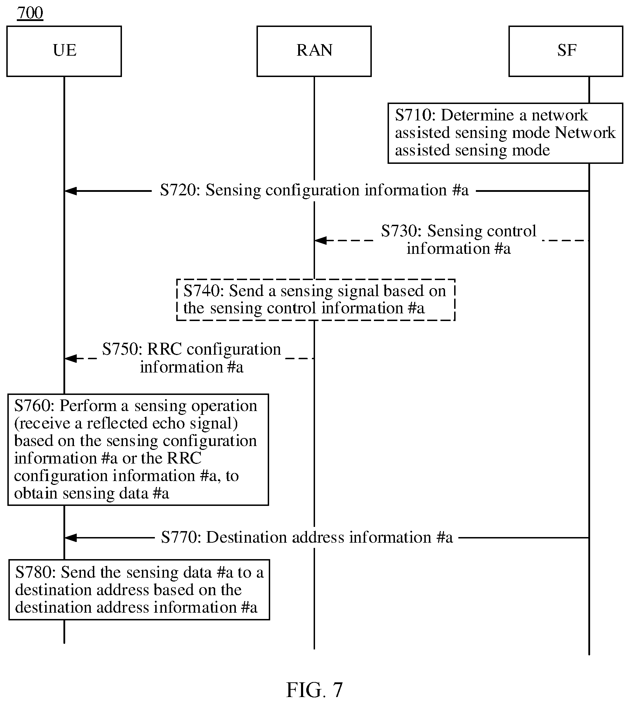

FIG. 7 is a schematic flowchart of a fifth communication sensing method 700 according to an embodiment of this application. Different from the method 600, in this implementation, an SF controls, in a unified manner, sensing configuration on a terminal and a base station based on a network assisted sensing mode Network assisted sensing mode. As shown in FIG. 7, the method includes a plurality of steps as follows.

S710: The SF determines that a sensing mode is the network assisted sensing mode Network assisted sensing mode.

For a scenario in which the network assisted sensing mode Network assisted sensing mode is determined to be used, refer to step S540 in the method 500. For brevity, details are not described herein again.

S720: The SF sends sensing configuration information #a to a UE.

Correspondingly, the UE receives the sensing configuration information #a from the SF.

The sensing configuration information #a includes at least one of the following: the network assisted sensing mode, sensing time information, or sensing resource information. Specifically, for descriptions of the sensing configuration information #a, refer to the sensing configuration information in step S310 in the method 300. For brevity, details are not described herein again.

For example, the sensing configuration information #a carries sensing indication information #a, and the sensing indication information #a indicates the UE to perform a sensing operation.

Optionally, the sensing indication information #a may further indicate that a mode in which the UE performs a sensing operation is the network assisted sensing mode.

Optionally, when the sensing configuration information #a does not carry the network assisted sensing mode, it may be understood that the network assisted sensing mode is preconfigured.

For example, the SF sends the sensing configuration information #a and identification information of a sensing assistant terminal (namely, the UE) to an AMF, and then the AMF sends the sensing configuration information #a to the UE by using a NAS message.

S730: Optionally, the SF sends sensing control information #a to a RAN.

Correspondingly, the RAN receives the sensing control information #a from the SF.

The sensing control information #a includes at least one of the following: the network assisted sensing mode, sensing area information, sensing time information, a sensing service requirement, or sensing resource information. Specifically, for descriptions of the sensing control information #a, refer to the sensing configuration information in step S310 in the method 300. For brevity, details are not described herein again.

For example, the sensing control information #a carries sensing indication information #b, and the sensing indication information #b indicates the RAN to perform a sensing operation.

Optionally, the sensing indication information #b may further indicate that a mode in which the RAN performs a sensing operation is the network assisted sensing mode.

Optionally, when the sensing control information #a does not carry the network assisted sensing mode, it may be understood that the network assisted sensing mode is preconfigured.

For example, the SF sends the sensing control information #a and an identifier of the sensing assistant terminal (namely, the LTE) to the AMF, and then the AMF sends the sensing control information #a to the RAN by using an NGAP message. In this case, the RAN may learn, by using the NGAP message, that the sensing control information #a is associated with a specific terminal UE, and further send RRC configuration information #a to the UE. For details, refer to step S750.

S740: Optionally, the RAN sends a sensing signal based on the sensing control information #a.

For example, the RAN may send a sensing signal to a sensing area indicated by the sensing area information, the RAN may send a sensing signal within sensing duration indicated by the sensing time information, the RAN may determine information such as a distance resolution, angle measurement precision, and a sensing speed resolution based on the sensing service requirement, or the RAN determines information such as a frequency and signal bandwidth based on sensing resource information, and sends a sensing signal on the determined frequency and signal bandwidth.

Optionally, the SF may further send time provision precision of the sensing assistant terminal to the RAN. For example, the SF may calculate the time provision precision based on sensing precision. Alternatively, the SF may send time provision information to the RAN through the AMF. Alternatively, the SF may further request a PCF to provide time for the terminal. For a specific time provision procedure, refer to step S350 in the method 300. For brevity, details are not described herein again.

It should be noted that, in steps S730 and S740, the RAN sends the sensing signal based on the sensing control information #a from the SF. Optionally, the RAN may also continuously or periodically send the sensing signal. In this case, there is no need to receive the sensing control information #a of the SF in step S730, and there is no need to send the sensing signal based on the sensing control information #a in step S740.

S750: Optionally, the RAN sends the RRC configuration information #a to the UE. Correspondingly, the UE receives the RRC configuration information #a from the RAN.

The RRC configuration information #a includes the sensing time information and/or the sensing resource information.

For example, the RRC configuration information #a carries sensing indication information #c, and the sensing indication information #c indicates the UE to perform a sensing operation.

Optionally, the sensing indication information #c may further indicate that a mode in which the UE performs a sensing operation is the network assisted sensing mode.

Optionally, if step S720 is not performed, the RRC configuration information #a further needs to include the sensing mode Network assisted sensing mode or the indication information #c indicating the sensing mode Network assisted sensing mode.

Optionally, when the RRC configuration information #a does not carry the Network assisted sensing mode, it may be understood that the network assisted sensing mode is preconfigured.

S760: The UE performs a sensing operation based on the sensing configuration information #a or the RRC configuration information #a, to obtain sensing data #a.

Optionally, if step S750 is not performed, the UE may receive a sensing signal (that is, a reflected echo signal) based on the indication information #a carried in the sensing configuration information #a in step S720. In this implementation, the sensing resource information may be preconfigured on the UE side and the RAN side, and the RAN does not need to interact with the UE. In other words, the RAN and the UE may separately send a sensing signal and receive a reflected echo signal based on the sensing resource information.

Further, the RAN sends the sensing signal in step S740, and in this case, the UE may receive a reflected echo signal within sensing time and/or on the frequency and the signal bandwidth that are indicated by the sensing resource information, and process the received reflected echo signal to generate the sensing data #a. It should be understood that the reflected echo signal is a reflected signal of the sensing signal #a that passes an object.

S770: The SF sends destination address information #a to the UE.

Correspondingly, the UE receives the destination address information #a from the SF.

It should be noted that sending in step S720 and sending in step S770 may be performed independently, or may be performed simultaneously. The sensing configuration information #a and the destination address information #a may be sent by using different messages, or may be sent by using a same message. Different information may also be combined. For example, the sensing configuration information #a further includes the destination address information #a, a DNN, NSSAI, or application information. This is not specifically limited in this application.

S780: The UE sends the sensing data #a to a destination address based on the destination address information #a.

For specific implementations of steps S770 and S780, refer to steps S640 and S650 in the method 600. For brevity, details are not described herein again.

According to the solution provided in this application, for the network assisted sensing mode, sensing configuration performed by the sensing network element on a first terminal and an access network device is implemented. This helps improve network sensing performance, and improve a sensing effect.

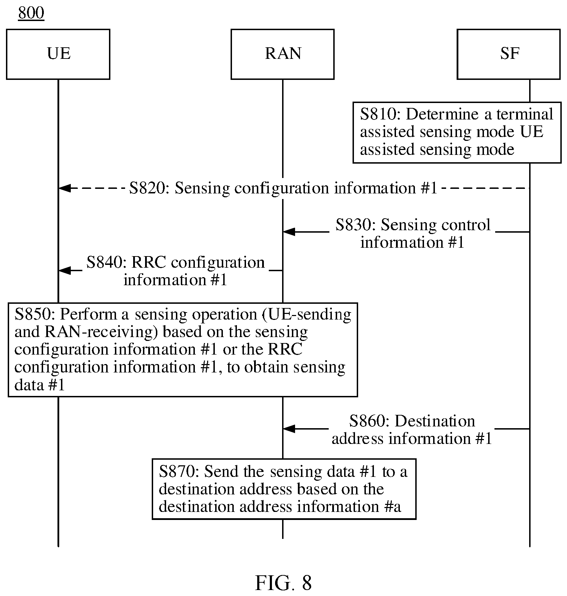

FIG. 8 is a schematic flowchart of a sixth communication sensing method 800 according to an embodiment of this application; Different from the method 700, in this implementation, an SF controls, in a unified manner, sensing configuration on a terminal and a base station based on a terminal assisted sensing mode UE assisted sensing mode. As shown in FIG. 8, the method includes a plurality of steps as follows.

S810: The SF determines that a sensing mode is the terminal assisted sensing mode UE assisted sensing mode.

For a scenario in which the terminal assisted sensing mode UE assisted sensing mode is determined to be used, refer to step S540 in the method 500. For brevity, details are not described herein again.

S820: Optionally, the SF sends sensing configuration information #1 to a UE.

Correspondingly, the UE receives the sensing configuration information #1 from the SF.

The sensing configuration information #1 includes at least one of the following: the UE assisted sensing mode, sensing area information, sensing time information, a sensing service requirement, or sensing resource information. Specifically, for descriptions of the sensing configuration information #1, refer to step S310 in the method 300. For brevity, details are not described herein again.

For example, the sensing configuration information #1 carries sensing indication information #1, and the sensing indication information #1 indicates the UE to perform a sensing operation.

Optionally, the sensing indication information #1 may further indicate that a mode in which the UE performs a sensing operation is the UE assisted sensing mode.

Optionally, when the sensing configuration information #1 does not carry the UE assisted sensing mode, it may be understood that the UE assisted sensing mode is preconfigured.

For example, the SF sends the sensing configuration information #1 and identification information of a sensing assistant terminal (namely, the UE) to an AMF, and then the AMF sends the sensing configuration information #1 to the UE by using a NAS message.

S830: The SF sends sensing control information #1 to a RAN.

Correspondingly, the RAN receives the sensing control information #1 from the SF.

The sensing control information #1 includes at least one of the following: the UE assisted sensing mode, the sensing time information, or the sensing resource information.

For example, the sensing configuration information #1 carries sensing indication information #2, and the sensing indication information #2 indicates the UE to perform a sensing operation.

Optionally, the sensing indication information #2 may further indicate that the mode in which the UE performs a sensing operation is the UE assisted sensing mode.

Optionally, when the sensing control information #1 does not carry the UE assisted sensing mode, it may be understood that the UE assisted sensing mode is preconfigured.

For example, the SF sends the sensing control information #1 and an identifier (for example, an SUPI or a GPSI) of the sensing assistant terminal (namely, the UE) to the AMF, and then the AMF sends the sensing control information #1 to the RAN by using an NGAP message. In this case, the RAN may learn, by using the NGAP message, that the sensing control information #1 is associated with a specific terminal UE, and further send RRC configuration information #1 to the UE. For details, refer to step S840.

Optionally, the SF may further send time provision precision of the sensing assistant terminal to the RAN. For example, the SF may calculate the time provision precision based on sensing precision. Alternatively, the SF may send time provision information to the RAN through the AMF. Alternatively, the SF may further request a PCF to provide time for the terminal. For a specific time provision procedure, refer to step S350 in the method 300. For brevity, details are not described herein again.

S840: The RAN sends the RRC configuration information #1 to the UE.

Correspondingly, the UE receives the RRC configuration information #1 from the RAN.

The RRC configuration information #1 includes at least one of the following: the UE assisted sensing mode, sensing area information, sensing time information, a sensing service requirement, or sensing resource information.

For example, the RRC configuration information #1 carries sensing indication information #3, and the sensing indication information #3 indicates the UE to perform a sensing operation.

Optionally, the sensing indication information #3 may further indicate that the mode in which the UE performs a sensing operation is the UE assisted sensing mode.

Optionally, when the RRC configuration information #1 does not carry the UE assisted sensing mode, it may be understood that the UE assisted sensing mode is preconfigured.

For example, the RAN sends the RRC configuration information #1 to the UE by using an RRC message.

S850: The UE performs a sensing operation based on the sensing configuration information #1 or the RRC configuration information #1, to obtain sensing data #1.

For example, the UE may send a sensing signal to a sensing area indicated by the sensing area information, the UE may send a sensing signal within sensing duration indicated by the sensing time information, the UE may determine information such as a distance resolution, angle measurement precision, and a sensing speed resolution based on the sensing service requirement, or the UE determines information such as a frequency and signal bandwidth based on sensing resource information, and sends a sensing signal on the determined frequency and signal bandwidth. Further, the UE sends the sensing signal, and in this case, the RAN may receive a reflected echo signal within sensing time and/or on the frequency and the signal bandwidth that are indicated by the sensing resource information, and process the received reflected echo signal to generate the sensing data #1. It should be understood that the reflected echo signal is a reflected signal of the sensing signal #1 that passes an object.

S860: The SF sends destination address information #1 to the RAN.

Correspondingly, the RAN receives the destination address information #1 from the SF.

For specific content carried in the destination address information #1, refer to the destination address information #Ain step S640 in the method 600. For brevity, details are not described herein again.

Optionally, the SF may further send at least one of the following to the RAN: a DNN, S-NSSAI, or tunnel endpoint information. The DNN, the S-NSSAI, or the tunnel endpoint information is used by the RAN to send the sensing data #1 to a destination address.

It should be noted that the sending in step S830 and the sending in step S860 may be performed independently, or may be performed simultaneously. The sensing control information #1 and the destination address information #1 may be sent by using different messages, or may be sent by using a same message. Alternatively, different information may also be combined. For example, the sensing control information #1 further includes the destination address information #1. This is not specifically limited in this application.

S870: The RAN sends the sensing data #1 to the destination address based on the destination address information #1.

For example, the RAN sends, by using an established PDU session or connection tunnel, the sensing data #1 to the destination address indicated by the destination address information #A.

According to the solution provided in this application, for the terminal assisted sensing mode, sensing configuration performed by the sensing network element on a first terminal and an access network device is implemented. This helps improve network sensing performance, and improve a sensing effect.

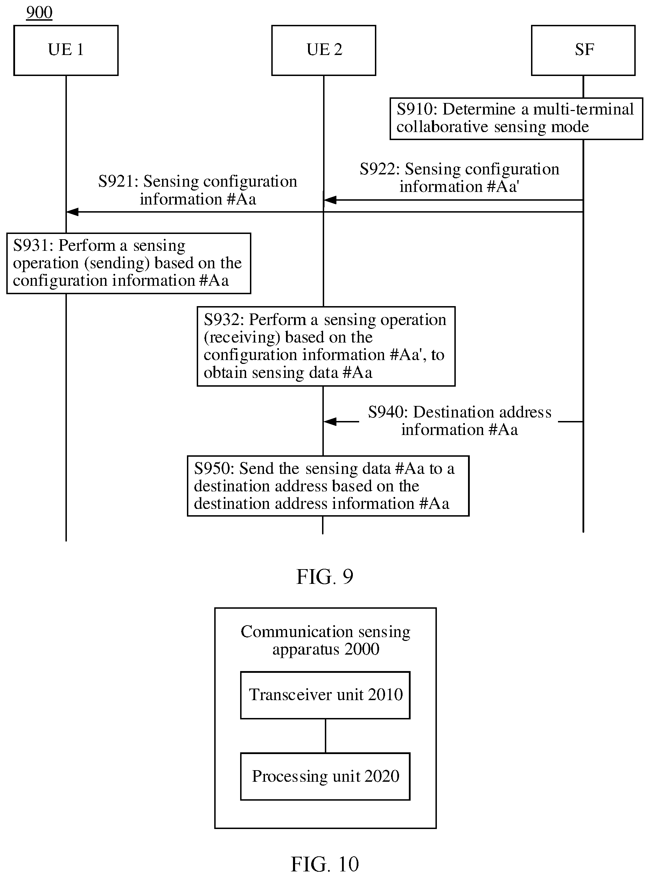

FIG. 9 is a schematic flowchart of a seventh communication sensing method 900 according to an embodiment of this application. Different from the method 1000, in this implementation, an SF controls, in a unified manner, sensing configuration on a plurality of terminals based on a multi-terminal collaborative sensing mode. As shown in FIG. 9, the method includes a plurality of steps as follows.

S910: The SF determines that a sensing mode is the multi-terminal collaborative sensing mode.

For example, an example in which two terminals (for example, a UE 1 and a UE 2) perform collaborative sensing, the UE 1 sends a sensing signal, and the UE 2 receives a reflected echo signal is used for description. A quantity of assistant terminals is not specifically limited in this application.

For a scenario in which the multi-terminal collaborative sensing mode is determined to be used, refer to step S540 in the method 500. For brevity, details are not described herein again.

S921: The SF sends sensing configuration information #Aa to the UE 1.

Correspondingly, the UE 1 receives the sensing configuration information #Aa from the SF.

S922: The SF sends sensing configuration information #Aa' to the UE 2.

Correspondingly, the UE 2 receives the sensing configuration information #Aa' from the SF.

The sensing configuration information #Aa includes at least one of the following: the multi-terminal collaborative sensing mode, sensing area information, sensing time information, an identifier of the UE 2, sensing role information, a sensing service requirement, or sensing resource information. The sensing configuration information #Aa' includes at least one of the following: the multi-terminal collaborative sensing mode, sensing time information, an identifier of the UE 1, sensing role information, or sensing resource information.

It should be understood that the sensing role information indicates that the UE 1 sends a sensing signal, and the UE 2 receives a reflected echo signal. Specifically, for descriptions of the sensing area information, the sensing time information, the sensing service requirement, or the sensing resource information, refer to step S310 in the method 300. For brevity, details are not described herein again.

S931: The UE 1 performs a sensing operation based on the sensing configuration information #Aa.

For example, the UE 1 sends a sensing signal based on a sensing area indicated by the sensing area information, sensing duration indicated by the sensing time information, a distance resolution, angle measurement precision, and the like determined based on the sensing service requirement, or a frequency and signal bandwidth determined based on the sensing resource information.

Optionally, before step S931, the UE 1 performs a UE 2 discovery procedure. Specifically, the UE 1 sends a discovery message, where the message includes the identifier of the UE 2. After receiving the discovery message, the UE 2 responds to the message, to implement mutual discovery between the UE 1 and the UE 2.

S932: The UE 2 performs a sensing operation based on the sensing configuration information #Aa'.

For example, the UE 2 receives a reflected echo signal within the sensing duration indicated by the sensing time information or on the frequency and signal bandwidth indicated by the sensing resource information, and process the received reflected echo signal, to generate sensing data #Aa.

S940: The SF sends destination address information #Aa to the UE 2.

Correspondingly, the RAN receives the destination address information #Aa from the SF.

Specifically, a sensing role of the UE 2 is receiving a reflected echo signal, and accordingly, the SF sends the destination address information #Aa to the UE 2.

It should be understood that a sensing role of the UE1 is sending a sensing signal, and the SF does not need to send the destination address information #Aa to the UE 1.

S950: The UE 2 sends the sensing data #Aa to a destination address based on the destination address information #Aa.

For specific content and specific implementations of sending and receiving information in steps S940 and S950, refer to steps S770 and S780 in the method 700. For brevity, details are not described herein again.

It should be noted that, that the UE 1 sends a sensing signal and the UE 2 receives a reflected echo signal is merely an example. This application is also applicable to a case in which the UE 1 receives a reflected echo signal (where the sensing role of the UE 1 is receiving a reflected echo signal), and the UE 2 sends a sensing signal (where the sensing role of the UE 2 is sending a sensing signal). In a specific implementation, the UE1 and the UE2 in the method 900 may be exchanged. For brevity, details are not described herein again.

According to the solution provided in this application, for the multi-terminal collaborative sensing mode, sensing configuration performed by the sensing network element on a first terminal and an access network device is implemented. This helps improve network sensing performance, and improve a sensing effect.

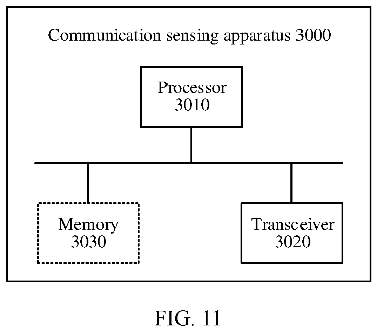

The foregoing describes in detail embodiments on a communication sensing method side of this application with reference to FIG. 1 to FIG. 9. The following describes in detail embodiments on an apparatus side of this application with reference to FIG. 10 and FIG. 11. It should be understood that descriptions of the apparatus embodiments correspond to the descriptions of the method embodiments, and therefore for a part that is not described in detail, refer to the foregoing method embodiments.

FIG. 10 is a block diagram of a communication sensing apparatus 2000 according to an embodiment of this application. As shown in FIG. 10, the apparatus 2000 includes a transceiver unit 2010 and a processing unit 2020. The transceiver unit 2010 may communicate with the outside, and the processing unit 2020 is configured to perform data processing. The transceiver unit 2010 may also be referred to as a communication interface or a transceiver unit.

In a possible design, the apparatus 2000 may implement steps or procedures performed by the first terminal (for example, the UE) in the foregoing method embodiments. The processing unit 2020 is configured to perform processing-related operations of the first terminal in the foregoing method embodiments, and the transceiver unit 2010 is configured to perform sending and receiving-related operations of the first terminal in the foregoing method embodiments.

In another possible design, the apparatus 2000 may implement steps or procedures performed by the access network device (for example, the RAN) in the foregoing method embodiments. The transceiver unit 2010 is configured to perform sending and receiving-related operations of the access network device in the foregoing method embodiments, and the processing unit 2020 is configured to perform processing-related operations of the access network device in the foregoing method embodiments.

In still another possible design, the apparatus 2000 may implement steps or procedures performed by the sensing network element (for example, the SF) in the foregoing method embodiments. The processing unit 2020 is configured to perform processing-related operations of the sensing network element in the foregoing method embodiments, and the transceiver unit 2010 is configured to perform sending and receiving-related operations of the sensing network element in the foregoing method embodiments.

It should be understood that the apparatus 2000 is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that, the apparatus 2000 may be specifically the transmit end in the foregoing embodiments, and may be configured to perform the procedures and/or steps corresponding to the transmit end in the foregoing method embodiments. Alternatively, the apparatus 2000 may be specifically the receive end in the foregoing embodiments, and may be configured to perform the procedures and/or steps corresponding to the receive end in the foregoing method embodiments. To avoid repetition, details are not described herein again.

The apparatus 2000 in each of the foregoing solutions has a function of implementing the corresponding steps performed by the transmit end in the foregoing method, or the apparatus 2000 in each of the foregoing solutions has a function of implementing the corresponding steps performed by the receive end in the foregoing method. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitting machine, and a receiving unit in the transceiver unit may be replaced by a receiver machine), and another unit, for example, the processing unit, may be replaced by a processor, to separately perform sending and receiving operations and processing-related operations in the method embodiments.

In addition, the transceiver unit may alternatively be a transceiver circuit (for example, may include a receiving circuit and a sending circuit), and the processing unit may be a processing circuit. In this embodiment of this application, the apparatus in FIG. 10 may be the receive end or the transmit end in the foregoing embodiments, or may be a chip or a chip system, for example, a system on chip (system on chip, SoC). The transceiver unit may be an input/output circuit or a communication interface. The processing unit is a processor a microprocessor or an integrated circuit integrated on the chip. This is not limited herein.

FIG. 11 shows a communication sensing apparatus 3000 according to an embodiment of this application. As shown in FIG. 11, the apparatus 3000 includes a processor 3010 and a transceiver 3000. The processor 3010 and the transceiver 3020 communicate with each other through an internal connection path. The processor 3010 is configured to execute instructions, to control the transceiver 3020 to send a signal and/or receive a signal.

Optionally, the apparatus 3000 may further include a memory 3030. The memory 3030 communicates with the processor 3010 and the transceiver 3020 through an internal connection path. The memory 3030 is configured to store the instructions. The processor 3010 may execute the instructions stored in the memory 3030.

In a possible implementation, the apparatus 3000 is configured to implement procedures and steps corresponding to the first terminal (for example, the LTE) in the foregoing method embodiments.

In another possible implementation, the apparatus 3000 is configured to implement procedures and steps corresponding to the access network device (for example, the RAN) in the foregoing method embodiments.

In still another possible implementation, the apparatus 3000 is configured to implement procedures and steps corresponding to the sensing network element (for example, the SF) in the foregoing method embodiments.

It should be understood that, the apparatus 3000 may be specifically the transmit end or the receive end in the foregoing embodiments, or may be a chip or a chip system. Correspondingly, the transceiver 3020 may be a transceiver circuit of the chip. This is not limited herein. Specifically, the apparatus 3000 may be configured to perform the steps and/or procedures corresponding to the transmit end or the receive end in the foregoing method embodiments.

Optionally, the memory 3030 may include a read-only memory and a random access memory, and provide instructions and data to the processor. A part of the memory may further include a nonvolatile random access memory. For example, the memory may further store information of a device type. The processor 3010 may be configured to execute the instructions stored in the memory. When the processor 3010 executes the instructions stored in the memory, the processor 3010 is configured to perform the steps and/or procedures of the method embodiment corresponding to the transmit end or the receive end.

In an implementation process, steps in the foregoing methods can be implemented by using a hardware integrated logic circuit in the processor, or by using instructions in a form of software. The steps in the methods disclosed with reference to embodiments of this application may be directly performed by a hardware processor, or may be performed by a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments can be implemented by a hardware integrated logic circuit in the processor, or by using instructions in a form of software. The processor may be a general-purpose processor, a digital signal processor, an application-specific integrated circuit, a field programmable gate array or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed by a hardware decoding processor, or may be performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that, the memory of the systems and methods described in this specification includes but is not limited to these and any other memories of appropriate types.

According to the method provided in embodiments of this application, this application further provides a computer program product. The computer program product includes computer program code. When the computer program code is run on a computer, the computer is enabled to perform the method in the foregoing embodiments.

According to the method provided in embodiments of this application, this application further provides a computer-readable medium, storing program code. When the program code is run on a computer, the computer is enabled to perform the method in the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. The protection scope of this application shall be subject to the protection scope of the claims.

## Claims

1. A communication sensing method, comprising:
determining, by a sensing network element (210), sensing configuration information associated with a first sensing mode, wherein the first sensing mode is one of a terminal assisted sensing mode, a network assisted sensing mode, a multi-terminal collaborative sensing mode, or a terminal based sensing mode, and the sensing configuration information is used by a first terminal (240) to perform a sensing operation; and
sending, by the sensing network element (210), the sensing configuration information to the first terminal (240),
**characterized in that**
the method further comprises:
sending, by the sensing network element (210), a data network name DNN or single-network slice selection assistance information S-NSSAI to the first terminal (240); or
sending, by the sensing network element (210), application information to the first terminal (240), wherein the application information is configured to be used to determine a DNN or S-NSSAI, the DNN or the S-NSSAI is configured to be used to establish a protocol data unit PDU session, and the PDU session is configured to be used for transmission of sensing data.

2. The method according to claim 1, wherein
when the first sensing mode is the terminal based sensing mode, the sensing configuration information comprises one or more of the following:
information indicating the terminal based sensing mode, sensing area information, sensing time information, or a sensing service requirement.

3. The method according to claim 1, wherein
when the first sensing mode is the network assisted sensing mode, the sensing configuration information comprises one or more of the following:
information indicating the network assisted sensing mode, sensing time information, or sensing resource information.

4. The method according to claim 3, wherein the method further comprises:
sending, by the sensing network element (210), first sensing control information to an access network device (220), wherein the first sensing control information indicates the access network device (220) to perform a sensing operation, and the first sensing control information comprises one or more of the following:
information indicating the network assisted sensing mode, sensing area information, sensing time information, or a sensing service requirement.

5. The method according to any one of claims 2 to 4, wherein the method further comprises:
sending, by the sensing network element (210), first address information to the first terminal (240), wherein the first address information indicates a first destination address for sending sensing data, and the sensing data is obtained based on the sensing operation.

6. The method according to claim 1, wherein
when the first sensing mode is the terminal assisted sensing mode, the sensing configuration information comprises one or more of the following:
information indicating the terminal assisted sensing mode, sensing area information, sensing time information, or a sensing service requirement.

7. A communication sensing method, comprising:
obtaining, by a first communication apparatus (240), sensing configuration information, wherein the sensing configuration information is associated with a first sensing mode, and the first sensing mode is one of a terminal assisted sensing mode, a network assisted sensing mode, a multi-terminal collaborative sensing mode, or a terminal based sensing mode; and
performing, by the first communication apparatus (240), a sensing operation based on the sensing configuration information,
**characterized in that**
the method further comprises:
receiving, by the first communication apparatus (240), a data network name DNN or single-network slice selection assistance information S-NSSAI from the sensing network element (210); or
receiving, by the first communication apparatus (240), application information from the sensing network element (210), wherein the application information is used to determine a DNN or S-NSSAI, the DNN or the S-NSSAI is used to establish a protocol data unit PDU session, and the PDU session is used for transmission of sensing data.

8. The method according to claim 7, wherein the obtaining, by a first communication apparatus (240), sensing configuration information comprises:
receiving, by the first communication apparatus (240), the sensing configuration information from a sensing network element (210); or
receiving, by the first communication apparatus (240), the sensing configuration information from an access network device (220).

9. The method according to claim 7 or 8, wherein
when the first sensing mode is the terminal based sensing mode, the sensing configuration information comprises one or more of the following:
information indicating the terminal based sensing mode, sensing area information, sensing time information, or a sensing service requirement; or
when the first sensing mode is the network assisted sensing mode, the sensing configuration information comprises one or more of the following:
information indicating the network assisted sensing mode, sensing time information, or sensing resource information or
when the first sensing mode is the terminal assisted sensing mode, the sensing configuration information comprises one or more of the following:
information indicating the terminal assisted sensing mode, sensing area information, sensing time information, or a sensing service requirement or
when the first sensing mode is the multi-terminal collaborative sensing mode, the sensing configuration information comprises one or more of the following:
information indicating the multi-terminal collaborative sensing mode, sensing area information, sensing time information, an identifier of a second communication apparatus, sensing role information, or a sensing service requirement, wherein the second communication apparatus is configured to perform collaborative sensing with the first communication apparatus (240).

10. The method according to any one of claims 7 to 9, wherein the method further comprises:
receiving, by the first communication apparatus (240), first address information from the sensing network element (210); and
sending, by the first communication apparatus (240), sensing data to a first destination address indicated by the first address information, wherein the sensing data is obtained based on the sensing operation.

11. A communication sensing apparatus (3000), comprising a processor (3010), wherein the processor (3010) is coupled to a memory (3030), and the processor (3010) is configured to execute a computer program stored in the memory (3030), to enable the apparatus (3000) to perform the method according to any one of claims 1 to 6, or enable the apparatus (3000) to perform the method according to any one of claims 7 to 10.

## Patentansprüche

1. Kommunikationserfassungsverfahren, umfassend:
Bestimmen, durch ein Erfassungsnetzelement (210), von einem ersten Erfassungsmodus zugeordneten Erfassungskonfigurationsinformationen, wobei der erste Erfassungsmodus einer der folgenden Erfassungsmodi ist: ein endgeräteunterstützter Erfassungsmodus, ein netzunterstützter Erfassungsmodus, ein kooperativer Mehrendgeräte-Erfassungsmodus oder ein endgerätebasierter Erfassungsmodus, und die Erfassungskonfigurationsinformationen von einem ersten Endgerät (240) zum Durchführen eines Erfassungsvorgangs verwendet werden; und
Senden, durch das Erfassungsnetzelement (210), der Erfassungskonfigurationsinformationen an das erste Endgerät (240),
**dadurch gekennzeichnet, dass**
das Verfahren ferner Folgendes umfasst:
Senden, durch das Erfassungsnetzelement (210), eines Datennetznamens DNN oder von Einzelnetzwerk-Slice-Auswahlunterstützungsinformationen S-NSSAI an das erste Endgerät (240); oder
Senden, durch das Erfassungsnetzelement (210), von Anwendungsinformationen an das erste Endgerät (240), wobei die Anwendungsinformationen zum Bestimmen eines DNN oder einer S-NSSAI ausgelegt sind, der DNN oder die S-NSSAI zur Verwendung zum Einrichten einer Protokolldateneinheits(PDU)-Sitzung ausgelegt ist und die PDU-Sitzung zur Verwendung zur Übertragung von Erfassungsdaten ausgelegt ist.

2. Verfahren nach Anspruch 1, wobei
wenn der erste Erfassungsmodus der endgerätebasierte Erfassungsmodus ist, die Erfassungskonfigurationsinformationen eine oder mehrere der folgenden Informationen umfassen:
Informationen, die den endgerätebasierten Erfassungsmodus, Erfassungsbereichsinformationen, Erfassungszeitinformationen oder eine Erfassungsdienstanforderung angeben.

3. Verfahren nach Anspruch 1, wobei
wenn der erste Erfassungsmodus der netzunterstützte Erfassungsmodus ist, die Erfassungskonfigurationsinformationen eine oder mehrere der folgenden Informationen umfassen:
Informationen, die den netzunterstützten Erfassungsmodus, Erfassungszeitinformationen oder Erfassungsressourceninformationen angeben.

4. Verfahren nach Anspruch 3, wobei das Verfahren ferner Folgendes umfasst:
Senden, durch das Erfassungsnetzelement (210), erster Erfassungssteuerinformationen an eine Zugangsnetzvorrichtung (220), wobei die ersten Erfassungssteuerinformationen die Zugangsnetzvorrichtung (220) anweisen, einen Erfassungsvorgang durchzuführen, und die ersten Erfassungssteuerinformationen eine oder mehrere der folgenden Informationen umfassen:
Informationen, die den netzunterstützten Erfassungsmodus, Erfassungsbereichsinformationen, Erfassungszeitinformationen oder eine Erfassungsdienstanforderung angeben.

5. Verfahren nach einem der Ansprüche 2 bis 4, wobei das Verfahren ferner Folgendes umfasst:
Senden, durch das Erfassungsnetzelement (210), erster Adressinformationen an das erste Endgerät (240), wobei die ersten Adressinformationen eine erste Zieladresse zum Senden von Erfassungsdaten angeben und die Erfassungsdaten auf Grundlage des Erfassungsvorgangs erhalten werden.

6. Verfahren nach Anspruch 1, wobei
wenn der erste Erfassungsmodus der endgeräteunterstützte Erfassungsmodus ist, die Erfassungskonfigurationsinformationen eine oder mehrere der folgenden Informationen umfassen:
Informationen, die den endgeräteunterstützten Erfassungsmodus, Erfassungsbereichsinformationen, Erfassungszeitinformationen oder eine Erfassungsdienstanforderung angeben.

7. Kommunikationserfassungsverfahren, umfassend:
Erhalten, durch eine erste Kommunikationsvorrichtung (240), von Erfassungskonfigurationsinformationen, wobei die Erfassungskonfigurationsinformationen einem ersten Erfassungsmodus zugeordnet sind und der erste Erfassungsmodus einer der folgenden Erfassungsmodi ist: ein endgeräteunterstützter Erfassungsmodus, ein netzunterstützter Erfassungsmodus, ein kooperativer Mehrendgeräte-Erfassungsmodus oder ein endgerätebasierter Erfassungsmodus; und
Durchführen, durch die erste Kommunikationsvorrichtung (240), eines Erfassungsvorgangs auf Grundlage der Erfassungskonfigurationsinformationen,
**dadurch gekennzeichnet, dass**
das Verfahren ferner Folgendes umfasst:
Empfangen, durch die erste Kommunikationsvorrichtung (240), eines Datennetznamens DNN oder von Einzelnetzwerk-Slice-Auswahlunterstützungsinformationen S-NSSAI von dem Erfassungsnetzelement (210); oder
Empfangen, durch die erste Kommunikationsvorrichtung (240), von Anwendungsinformationen von dem Erfassungsnetzelement (210), wobei die Anwendungsinformationen zum Bestimmen eines DNN oder einer S-NSSAI verwendet werden, der DNN oder die S-NSSAI zum Einrichten einer Protokolldateneinheits(PDU)-Sitzung verwendet wird und die PDU-Sitzung zur Übertragung von Erfassungsdaten verwendet wird.

8. Verfahren nach Anspruch 7, wobei das Erhalten von Erfassungskonfigurationsinformationen durch eine erste Kommunikationsvorrichtung (240) Folgendes umfasst:
Empfangen, durch die erste Kommunikationsvorrichtung (240), der Erfassungskonfigurationsinformationen von einem Erfassungsnetzelement (210); oder
Empfangen, durch die erste Kommunikationsvorrichtung (240), der Erfassungskonfigurationsinformationen von einer Zugangsnetzvorrichtung (220).

9. Verfahren nach Anspruch 7 oder 8, wobei
wenn der erste Erfassungsmodus der endgerätebasierte Erfassungsmodus ist, die Erfassungskonfigurationsinformationen eine oder mehrere der folgenden Informationen umfassen:
Informationen, die den endgerätebasierten Erfassungsmodus, Erfassungsbereichsinformationen, Erfassungszeitinformationen oder eine Erfassungsdienstanforderung angeben; oder
wenn der erste Erfassungsmodus der netzunterstützte Erfassungsmodus ist, die Erfassungskonfigurationsinformationen eine oder mehrere der folgenden Informationen umfassen:
Informationen, die den netzunterstützten Erfassungsmodus, Erfassungszeitinformationen oder Erfassungsressourceninformationen angeben; oder
wenn der erste Erfassungsmodus der endgeräteunterstützte Erfassungsmodus ist, die Erfassungskonfigurationsinformationen eine oder mehrere der folgenden Informationen umfassen:
Informationen, die den endgeräteunterstützten Erfassungsmodus, Erfassungsbereichsinformationen, Erfassungszeitinformationen oder eine Erfassungsdienstanforderung angeben; oder
wenn der erste Erfassungsmodus der kooperative Mehrendgeräte-Erfassungsmodus ist, die Erfassungskonfigurationsinformationen eine oder mehrere der folgenden Informationen umfassen:
Informationen, die den kooperativen Mehrendgeräte-Erfassungsmodus, Erfassungsbereichsinformationen, Erfassungszeitinformationen, eine Kennung einer zweiten Kommunikationsvorrichtung, Erfassungsrolleninformationen oder eine Erfassungsdienstanforderung angeben, wobei die zweite Kommunikationsvorrichtung zum Durchführen einer kooperativen Erfassung mit der ersten Kommunikationsvorrichtung (240) ausgelegt ist.

10. Verfahren nach einem der Ansprüche 7 bis 9, wobei das Verfahren ferner Folgendes umfasst:
Empfangen, durch die erste Kommunikationsvorrichtung (240), erster Adressinformationen von dem Erfassungsnetzelement (210); und
Senden, durch die erste Kommunikationsvorrichtung (240), von Erfassungsdaten an eine durch die ersten Adressinformationen angegebene erste Zieladresse, wobei die Erfassungsdaten auf Grundlage des Erfassungsvorgangs erhalten werden.

11. Kommunikationserfassungsvorrichtung (3000), umfassend einen Prozessor (3010), wobei der Prozessor (3010) mit einem Speicher (3030) gekoppelt ist und der Prozessor (3010) dazu ausgelegt ist, ein in dem Speicher (3030) gespeichertes Computerprogramm auszuführen, um die Vorrichtung (3000) zum Durchführen des Verfahrens nach einem der Ansprüche 1 bis 6 oder die Vorrichtung (3000) zum Durchführen des Verfahrens nach einem der Ansprüche 7 bis 10 zu veranlassen.

## Revendications

1. Procédé de détection de communication, comprenant :
la détermination, par un élément de réseau de détection (210), d'informations de configuration de détection associées à un premier mode de détection, le premier mode de détection étant l'un parmi un mode de détection assisté par terminal, un mode de détection assisté par réseau, un mode de détection collaborative multiterminal ou un mode de détection basé sur terminal, et les informations de configuration de détection étant utilisées par un premier terminal (240) pour réaliser une opération de détection ; et
l'envoi, par l'élément de réseau de détection (210), des informations de configuration de détection au premier terminal (240),
**caractérisé en ce que**
le procédé comprend en outre :
l'envoi, par l'élément de réseau de détection (210), d'un nom de réseau de données DNN ou d'informations d'assistance de sélection de tranche de réseau unique S-NSSAI au premier terminal (240) ; ou
l'envoi, par l'élément de réseau de détection (210), d'informations d'application au premier terminal (240), les informations d'application étant configurées pour être utilisées pour déterminer un DNN ou des S-NSSAI, le DNN ou les S-NSSAI étant configurés pour être utilisés pour établir une session d'unité de données de protocole PDU, et la session PDU étant configurée pour être utilisée pour la transmission de données de détection.

2. Procédé selon la revendication 1, dans lequel
lorsque le premier mode de détection est le mode de détection basé sur terminal, les informations de configuration de détection comprennent un ou plusieurs des éléments suivants :
des informations indiquant le mode de détection basé sur terminal, des informations de zone de détection, des informations de temps de détection ou une exigence de service de détection.

3. Procédé selon la revendication 1, dans lequel
lorsque le premier mode de détection est le mode de détection assisté par réseau, les informations de configuration de détection comprennent un ou plusieurs des éléments suivants :
des informations indiquant le mode de détection assisté par réseau, des informations de temps de détection ou des informations de ressource de détection.

4. Procédé selon la revendication 3, dans lequel le procédé comprend en outre :
l'envoi, par l'élément de réseau de détection (210), de premières informations de commande de détection à un dispositif de réseau d'accès (220), les premières informations de commande de détection indiquant au dispositif de réseau d'accès (220) de réaliser une opération de détection, et les premières informations de commande de détection comprenant un ou plusieurs des éléments suivants :
des informations indiquant le mode de détection assisté par réseau, des informations de zone de détection, des informations de temps de détection ou une exigence de service de détection.

5. Procédé selon l'une quelconque des revendications 2 à 4, dans lequel le procédé comprend en outre :
l'envoi, par l'élément de réseau de détection (210), de premières informations d'adresse au premier terminal (240), les premières informations d'adresse indiquant une première adresse de destination pour envoyer des données de détection, et les données de détection étant obtenues sur la base de l'opération de détection.

6. Procédé selon la revendication 1, dans lequel
lorsque le premier mode de détection est le mode de détection assisté par terminal, les informations de configuration de détection comprennent un ou plusieurs des éléments suivants :
des informations indiquant le mode de détection assité par terminal, des informations de zone de détection, des informations de temps de détection ou une exigence de service de détection.

7. Procédé de détection de communication, comprenant :
l'obtention, par un premier appareil de communication (240), d'informations de configuration de détection, les informations de configuration de détection étant associées à un premier mode de détection, et le premier mode de détection étant un parmi un mode de détection assisté par terminal, un mode de détection assisté par réseau, un mode de détection collaborative multiterminal ou un mode de détection basé sur terminal ; et
la réalisation, par le premier appareil de communication (240), d'une opération de détection sur la base des informations de configuration de détection,
**caractérisé en ce que**
le procédé comprend en outre :
la réception, par le premier appareil de communication (240), d'un nom de réseau de données DNN ou d'informations d'assistance de sélection de tranche de réseau unique S-NSSAI en provenance de l'élément de réseau de détection (210) ; ou
la réception, par le premier appareil de communication (240), d'informations d'application en provenance de l'élément de réseau de détection (210), les informations d'application étant utilisées pour déterminer un DNN ou des S-NSSAI, le DNN ou les S-NSSAI étant utilisés pour établir une session d'unité de données de protocole PDU, et la session PDU étant utilisée pour transmettre des données de détection.

8. Procédé selon la revendication 7, dans lequel l'obtention, par un premier appareil de communication (240), d'informations de configuration de détection comprend :
la réception, par le premier appareil de communication (240), des informations de configuration de détection en provenance d'un élément de réseau de détection (210) ; ou
la réception, par le premier appareil de communication (240), des informations de configuration de détection en provenance d'un dispositif de réseau d'accès (220).

9. Procédé selon la revendication 7 ou 8, dans lequel
lorsque le premier mode de détection est le mode de détection basé sur terminal, les informations de configuration de détection comprennent un ou plusieurs des éléments suivants :
des informations indiquant le mode de détection basé sur terminal, des informations de zone de détection, des informations de temps de détection ou une exigence de service de détection ; ou
lorsque le premier mode de détection est le mode de détection assisté par réseau, les informations de configuration de détection comprennent un ou plusieurs des éléments suivants :
des informations indiquant le mode de détection assisté par réseau, des informations de temps de détection ou des informations de ressource de détection ou
lorsque le premier mode de détection est le mode de détection assisté par terminal, les informations de configuration de détection comprennent un ou plusieurs des éléments suivants :
des informations indiquant le mode de détection assisté par terminal, des informations de zone de détection, des informations de temps de détection ou une exigence de service de détection ou
lorsque le premier mode de détection est le mode de détection collaborative multiterminal, les informations de configuration de détection comprennent l'un ou plusieurs des éléments suivants :
des informations indiquant le mode de détection collaborative multiterminal, des informations de zone de détection, des informations de temps de détection, un identifiant d'un deuxième appareil de communication, des informations de rôle de détection ou une exigence de service de détection, le deuxième appareil de communication étant configuré pour réaliser une détection collaborative avec le premier appareil de communication (240).

10. Procédé selon l'une quelconque des revendications 7 à 9, dans lequel le procédé comprend en outre :
la réception, par le premier appareil de communication (240), de premières informations d'adresse en provenance de l'élément de réseau de détection (210) ; et
l'envoi, par le premier appareil de communication (240), de données de détection à une première adresse de destination indiquée par les premières informations d'adresse, les données de détection étant obtenues sur la base de l'opération de détection.

11. Appareil (3000) de détection de communication, comprenant un processeur (3010), le processeur (3010) étant couplé à une mémoire (3030), et le processeur (3010) étant configuré pour exécuter un programme informatique stocké dans la mémoire (3030), pour permettre à l'appareil (3000) de réaliser le procédé selon l'une quelconque des revendications 1 à 6, ou pour permettre à l'appareil (3000) de réaliser le procédé selon l'une quelconque des revendications 7 à 10.
